(19) Europäisches Patentamt
European Patent Office
Office européen des brevets

(11) Veröffentlichungsnummer: **0 258 806 B1**

(12) **EUROPÄISCHE PATENTSCHRIFT**

(45) Veröffentlichungstag der Patentschrift: **27.12.90**

(51) Int. Cl.⁵: **C09B 62/08**, C09B 62/507, D06P 1/38

(21) Anmeldenummer: **87112385.7**

(22) Anmeldetag: **26.08.87**

(54) **Wasserlösliche Disazoverbindungen, Verfahren zu ihrer Herstellung und ihre Verwendung als Farbstoffe.**

(30) Priorität: **30.08.86 DE 3629574**

(43) Veröffentlichungstag der Anmeldung: **09.03.88 Patentblatt 88/10**

(45) Bekanntmachung des Hinweises auf die Patenterteilung: **27.12.90 Patentblatt 90/52**

(84) Benannte Vertragsstaaten: **BE CH DE FR GB IT LI**

(56) Entgegenhaltungen:
**EP-A- 0 094 019**
**DE-A- 3 320 972**
**GB-A- 2 007 698**
**GB-A- 2 008 143**

(73) Patentinhaber: **HOECHST AKTIENGESELLSCHAFT, Postfach 80 03 20, D-6230 Frankfurt am Main 80(DE)**

(72) Erfinder: **Schläfer, Ludwig, Dr., Königsberger Strasse 40, D-6233 Kelkheim (Taunus)(DE)**
Erfinder: **Springer, Hartmut, Dr., Am Erdbeerstein 27, D-6240 Königstein/Taunus(DE)**
Erfinder: **Hähnle, Reinhard, Dr., Kastanienweg 7a, D-6240 Königstein/Taunus(DE)**

**EP 0 258 806 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise Mischgewebe, in einer zweistufigen Verfahrensweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Man hat deshalb versucht, solche Mischfasermaterialien unter Verwendung eines Farbstoffgemisches aus einem faserreaktiven Farbstoff zur Anfärbung des Cellulosefaseranteils und einem Dispersionsfarbstoff zur Anfärbung des Polyesterfaseranteils zu färben. Diese Verfahrensweise hat jedoch deutliche Nachteile. Der Grund liegt darin, daß faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind. Die Folge ist demgemäß, daß bei der Fixierung der faserreaktiven Farbstoffe im alkalischen Milieu die gleichzeitig vorhandenen Dispersionsfarbstoffe und gegebenenfalls auch die Polyesterfasern geschädigt werden können.

Es bestand somit die Aufgabe, diese bisher bekannten Nachteile zu reduzieren oder gar zu beheben, zumal das Färben von Mischgeweben, wie beispielsweise solchen aus Cellulose- und Polyesterfasern, zunehmend an Bedeutung gewinnt. Somit besteht auch verstärkt ein Interesse an Farbstoffen, die das Färben von solchen Mischgeweben problemloser machen, so insbesondere an faserreaktiven Farbstoffen, die im nicht-alkalischen Bereich auf der Cellulosefaser zu fixieren vermögen und zudem bei möglichst niedrigen Färbetemperaturen angewendet werden können.

So hat man mit der deutschen Offenlegungsschrift Nr. 2 634 308 und der US-PS 4 300 902 Farbstoffe zum Färben von solchen Mischfasermaterialien vorgeschlagen, die eine oder mehrere s-Triazinylgruppen mit einem quaternären Stickstoffsubstituenten, wie einen Pyridiniumrest, zum Beispiel der Nicotinsäure, enthalten, und später gemäß der US-Patentschrift Nr. 4 453 945 Farbstoffe gleichen Typs mit speziell dem Nicotinsäurerest als quaternären Stickstoffsubstituenten zum Färben von Cellulosefasern und Cellulose/Polyester-Mischfasern angewendet. Diese Farbstoffe bzw. die hierfür anzuwendenden Färbeverfahren haben jedoch Nachteile. Während für die Farbstoffe der deutschen Offenlegungsschrift Nr. 2 634 308 und der US-PS 4 300 902 Färbetemperaturen von über 150°C erforderlich sind, dagegen das Färbeverfahren der US-Patentschrift Nr. 4 453 945 nach den dortigen Angaben mit Färbetemperaturen unterhalb 150°C auskommt, so zeigen doch die in diesen drei Druckschriften genannten Farbstoffe den schwerwiegenden Nachteil, daß ihre Farbausbeute beim Einsatz nach den Ausziehverfahren auf Cellulosefasermaterialien, wie Baumwolle, stark vom pH-Wert des Färbebades abhängig ist. Dies bedeutet, daß die Tiefe der Ausfärbungen mit diesen bekannten Farbstoffen auf Baumwollfasern bei pH-Werten zwischen 4 und 8 recht unterschiedlich ist, wobei im allgemeinen gilt, daß die Farbtiefe mit steigendem pH-Wert zunimmt und deren Maximum, wie bei allen klassischen faserreaktiven Farbstoffen, im stark alkalischen Bereich, somit oberhalb von pH 8, liegt. Darüberhinaus ist der Aufbau der Färbungen mit diesen Farbstoffen, d.h. die Relation zwischen eingesetzter Farbstoffmenge und erhaltener Farbausbeute auf der Cellulosefaser (Farbstärke oder Farbtiefe) unzureichend, da die Farbausbeute auf der Faser sich von bestimmten Farbstoffkonzentrationen im Färbebad an mit Erhöhung der Farbstoffmenge zum Zwecke größer Farbtiefen nicht mehr erhöht.

Diese Mängel haften ebenfalls den in der europäischen Patentanmeldungs-Veröffentlichung Nr. 0 167 219A beschriebenen Farbstoffen, die neben einem pyridiniumsubstituierten s-Triazinylrest eine faserreaktive Gruppe des Vinylsulfonyltyps enthalten, an. Gleiches gilt für die in der US-Patentschrift Nr. 4 323 497 und in der britischen Patentschrift Nr. 2 007 698 B beschriebenen Farbstoffe.

Mit der vorliegenden Erfindung wurden nunmehr neue wasserlösliche Verbindungen, die der nachstehend genannten und definierten allgemeinen Formel (1) entsprechen, sowie deren 1:1-Kupferkomplex-Derivate gefunden, die faserreaktive Eigenschaften besitzen und sich nicht nur mit Vorteil im alkalischen Bereich zum Färben von Cellulosefasern anwenden lassen, sondern die überraschenderweise auf Cellulosefasern bereits im schwach sauren bis neutralen Bereich, nämlich unter den Bedingungen des Färbens von Polyesterfasern bei Temperaturen zwischen 100 und 150°C in wäßrigem Medium, zu fixieren vermögen. Durch die Auffindung der neuen Farbstoffe der allgemeinen Formel (1) und deren 1:1-Kupferkomplex-Derivate eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und echt durch die jeweilige Farbstoffart angefärbt werden und Ton-in-Ton-Färbungen erhalten werden können, wenn der angewendete Dispersionsfarbstoff die gleiche Nuance wie der faserreaktive Farbstoff besitzt.

Die erfindungsgemäßen faserreaktiven Verbindungen entsprechen der allgemeinen Formel (1)

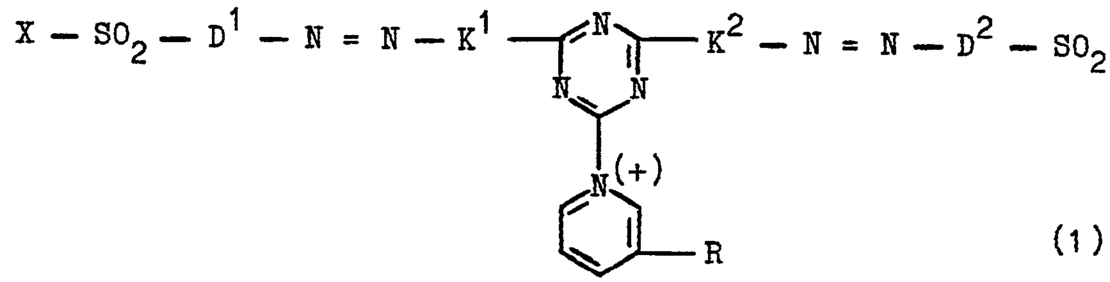

(1)

in welcher die Formelglieder die folgenden Bedeutungen besitzen:

$D^1$ ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 2 Sulfogruppen, 1 Carboxygruppe, 1 Chloratom und 1 Bromatom ausgewählt sind, wobei einer dieser Substituenten in ortho-Stellung zur Azogruppe an den Benzolkern gebunden ist, oder

$D^1$ ist ein Naphthalinring, der durch eine Sulfogruppe in ortho-Stellung zur Azogruppe substituiert sein kann, oder

$D^1$ ist ein Rest der allgemeinen Formel (2a), (2b) oder (2c)

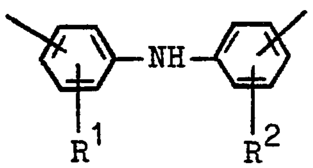

(2a)

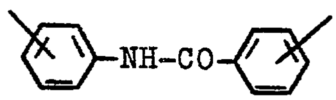

(2b)

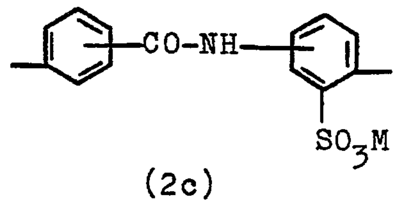

(2c)

in welchen

$R^1$ ein Wasserstoffatom, eine Nitro-, Sulfo-, Methyl-, Ethyl-, Methoxy- oder Ethoxygruppe bedeutet und

$R^2$ eine der Bedeutungen von $R^1$ hat und zu $R^1$ gleich oder von $R^1$ verschieden ist;

$D^2$ ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 2 Sulfogruppen, 1 Carboxygruppe, 1 Chloratom und 1 Bromatom ausgewählt sind, wobei einer dieser Substituenten in ortho-Stellung zur Azogruppe an den Benzolkern gebunden ist, oder

$D^2$ ist ein Naphthalinring, der durch eine Sulfogruppe in ortho-Stellung zur Azogruppe substituiert sein kann, oder

$D^2$ ist ein Rest der allgemeinen Formel (2d), (2e) oder (2f)

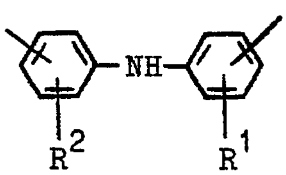

(2d)

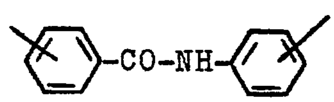

(2e)

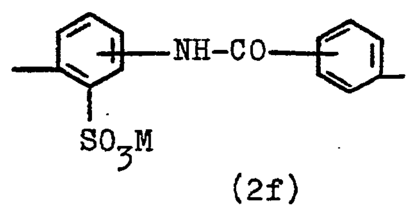

(2f)

in welchen

$R^1$ ein Wasserstoffatom, eine Nitro-, Sulfo-, Methyl-, Ethyl-, Methoxy- oder Ethoxygruppe bedeutet und

$R^2$ eine der Bedeutungen von $R^1$ hat und zu $R^1$ gleich oder von $R^1$ verschieden ist,

wobei $D^1$ und $D^2$ zueinander gleiche oder voneinander verschiedene Bedeutungen besitzen können; oder

$D^1$ oder $D^2$ oder beide stellen im Falle der 1:1-Kupferkomplex-Verbindungen einen Formelrest D* dar, wobei beide D* zueinander gleich oder voneinander verschieden sein können, und jedes D* bedeutet einen Benzolring, der in ortho-Stellung zur Azogruppe durch eine Oxigruppe substituiert ist, an der das Kupferatom komplex gebunden ist, und der neben der Gruppe $-SO_2-X$ noch zusätzlich durch eine Methyl-, Ethyl-, Methoxy-, Ethoxy-, Sulfo- oder Carboxygruppe oder ein Chlor- oder Bromatom substituiert sein kann, oder ist ein Naphthalinring, der in ortho-Stellung zur Azogruppe durch eine Oxigruppe substituiert ist, an der das Kupferatom komplex gebunden ist;

$K^1$ ist ein Rest der allgemeinen Formel (3a), (3b) oder (3c)

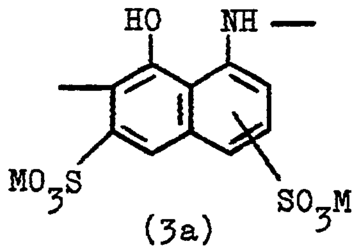

(3a)

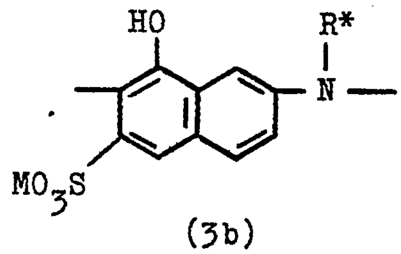

(3b)

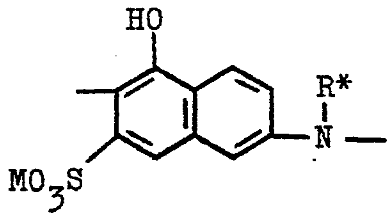

(3c)

in welchen
M für ein Wasserstoffatom oder ein Alkalimetall, wie Natrium, Kalium oder Lithium, steht, und
R* eine Ethylgruppe oder bevorzugt ein Wasserstoffatom oder eine Methylgruppe ist und
die eine Gruppe $-SO_3M$ in Formel (3a) in meta- oder para-Stellung zur Gruppe NH steht;
$K^2$ ist ein Rest der allgemeinen Formel (4a), (4b) oder (4c)

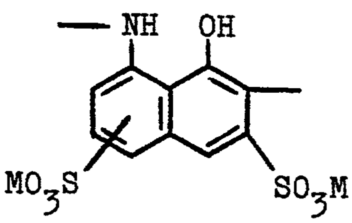

(4a)

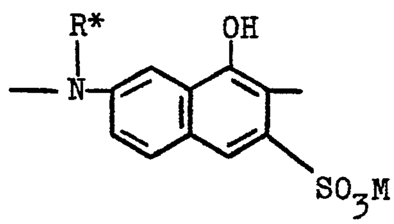

(4b)

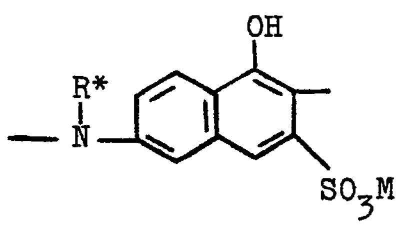

(4c)

in welchen
M und R* die obengenannten Bedeutungen haben und die eine Gruppe $-SO_3M$ in Formel (4a) in meta- oder para-Stellung zur Gruppe NH steht,
wobei $K^1$ und $K^2$ eine zueinander gleiche oder eine voneinander verschiedene Bedeutung besitzen können und wobei im Falle der Kupferkomplexverbindungen die naphtholische Hydroxygruppe als Oxigruppe mit dem Kupferatom komplex gebunden ist;
X ist die Vinylgruppe, eine β-Sulfatoethyl- oder die β-Chlorethyl-Gruppe, wobei beide X zueinander gleiche oder voneinander verschiedene Bedeutungen besitzen können;
R ist die Carboxygruppe oder die Carbonamidgruppe; eine der Sulfo- und Carboxygruppen in den Resten R, $D^1$, $D^2$, $K^1$ und $K^2$ bildet ein zum Pyridiniumkation äquivalentes Anion.

Bevorzugt von den Verbindungen der Formel (1) sind solche entsprechend der allgemeinen Formel (1A)

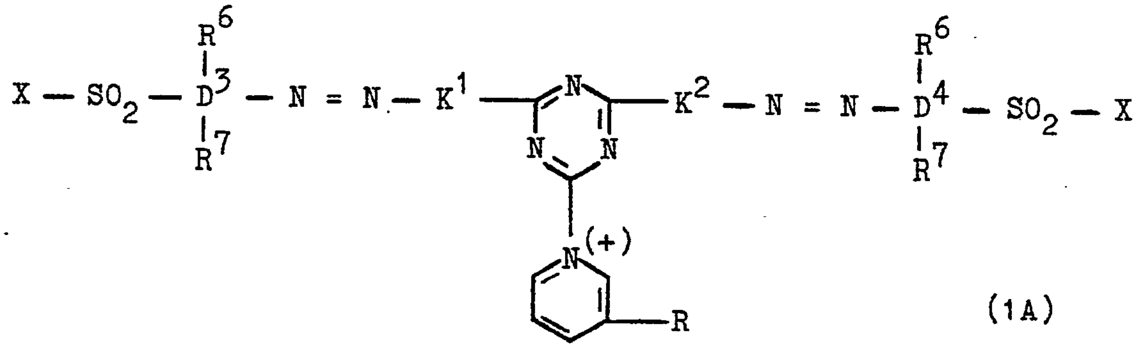

(1A)

in welcher
$D^3$ und $D^4$ zueinander gleiche oder voneinander verschiedene Bedeutungen besitzen und jedes einen Benzolring oder einen Naphthalinring bedeutet,
$R^6$ im Falle, daß $D^3$ bzw. $D^4$ einen Benzolring bedeutet, ein Wasserstoffatom oder eine in ortho-Stellung zur Azogruppe befindliche Methyl-, Ethyl-, Methoxy-, Ethoxy-, Sulfo- oder Carboxygruppe oder ein in ortho-Stellung zur Azogruppe befindliches Chlor- oder Bromatom ist, oder im Falle, daß $D^3$ bzw. $D^4$ einen Naphthalinring bedeuet, ein Wasserstoffatom oder eine in ortho-Stellung zur Azogruppe befindliche Sulfogruppe ist,
$R^7$ ein Wasserstoffatom oder eine Methyl-, Ethyl-, Methoxy-, Ethoxy-, Nitro- oder Sulfogruppe bedeutet und X, R, $K^1$ und $K^2$ die oben genannten Bedeutungen haben.

Bevorzugt sind insbesondere Verbindungen der allgemeinen Formel (1) mit $D^1$ und $D^2$ jeweils einem Benzolring, der durch 1 oder 2 Substituenten substituiert sein kann, die aus der Menge von 2 Methoxygruppen, 1 Methylgruppe, 1 Chloratom und 1 Bromatom ausgewählt sind, wobei einer dieser Substituenten in ortho-Stellung zur Azogruppe gebunden steht, oder mit $D^1$ und $D^2$ einem Naphthalinring, der durch eine Sulfogruppe in ortho-Stellung zur Azogruppe substituiert sein kann.

Bevorzugt sind darüberhinaus Verbindungen der allgemeinen Formel (1), in welchen die einzelnen zweifach auftretenden Formelglieder zueinander gleiche Bedeutung besitzen.

Erfindungsgemäße 1:1-Kupferkomplex-Disazoverbindungen sind insbesondere Verbindungen der allgemeinen Formel (1a) und (1b), insbesondere hiervon Verbindungen der allgemeinen Formel (1a)

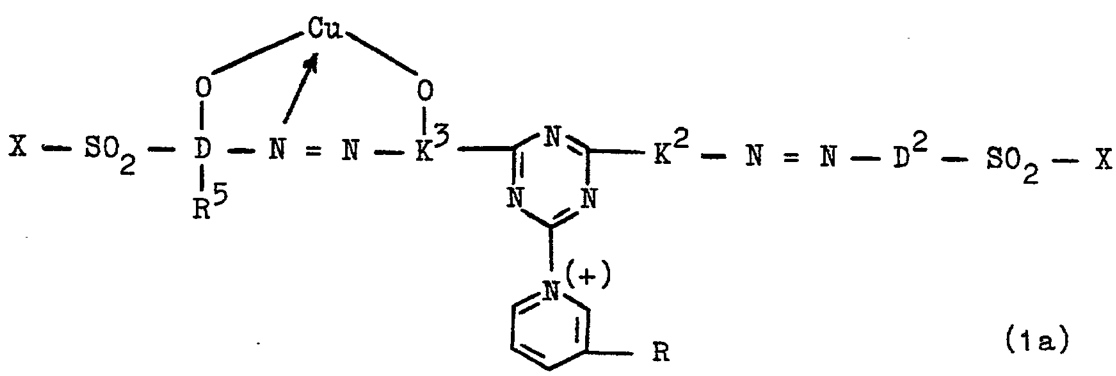

(1a)

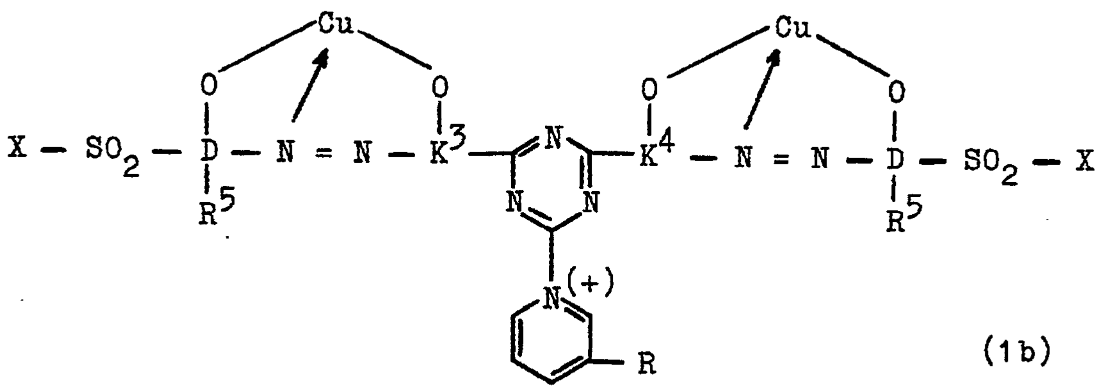

(1b)

in welchen X, $D^2$, $K^2$ und R die obengenannten Bedeutungen haben und
D einen Benzolring oder einen Naphthalinring bedeutet, an welche die metallkomplexbildende Oxigruppe in ortho-Stellung zur Azogruppe gebunden steht,
$R^5$ ein Wasserstoffatom oder eine Methyl-, Ethyl-, Methoxy-, Ethoxy- oder Sulfogruppe oder ein Chloratom, falls D einen Benzolring bedeutet, oder
$R^5$ ein Wasserstoffatom ist, falls D einen Naphthalinring bedeutet,
wobei in Formel (1b) beide D bzw. beide $R^5$ eine zueinander gleiche oder eine voneinander verschiedene Bedeutung besitzen können,
$K^3$ ein Rest der allgemeinen Formel (5a), (5b) oder (5c)

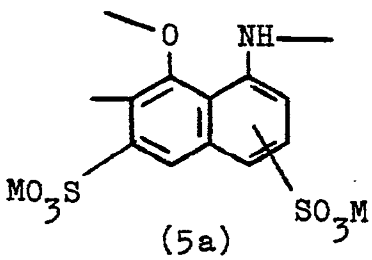

(5a)

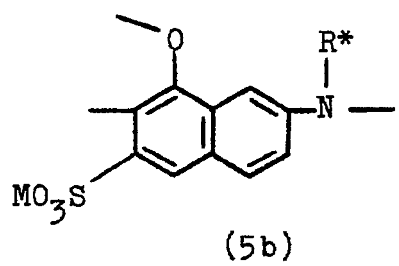

(5b)

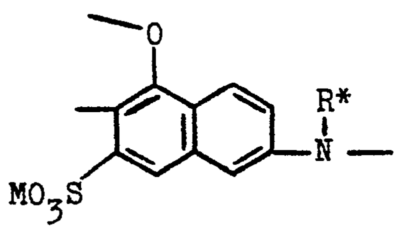

(5c)

ist, in welchen
M und R* die obengenannten Bedeutungen haben und
$K^4$ ein Rest der allgemeinen Formel (6a), (6b) oder (6c)

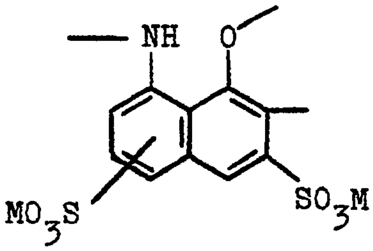

(6a)

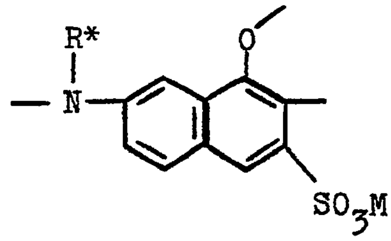

(6b)

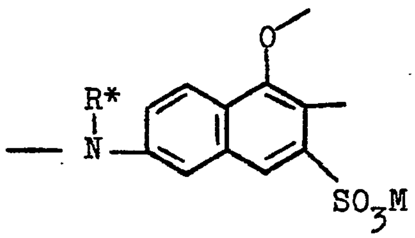

(6c)

ist, in welchen
M und R* die obengenannten Bedeutungen haben, wobei $K^3$ und $K^4$ zueinander gleiche oder voneinander verschiedene Bedeutungen besitzen können.

Von den erfindungsgemäßen Disazoverbindungen sind insbesondere die nachstehend beschriebenen Verbindungen der allgemeinen Formeln (11a), (11b), (11c), (11d), (11e), (11f), (11g) und (11h) hervorzuheben:

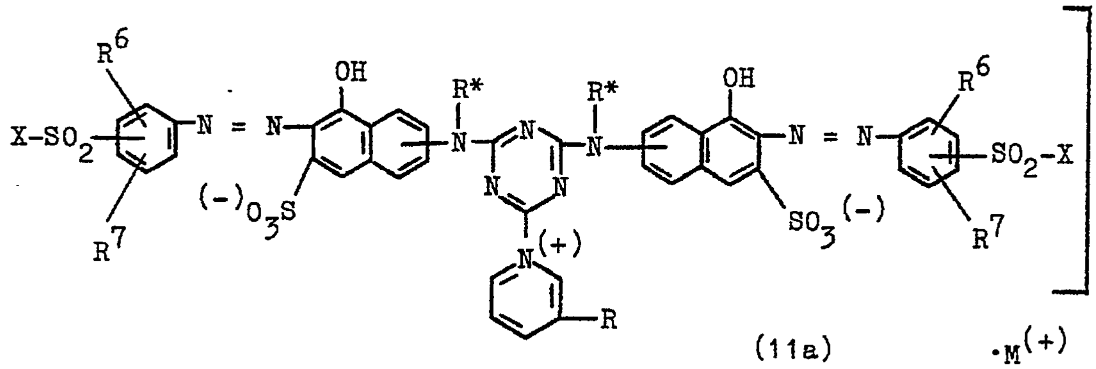

(11a) $\cdot M^{(+)}$

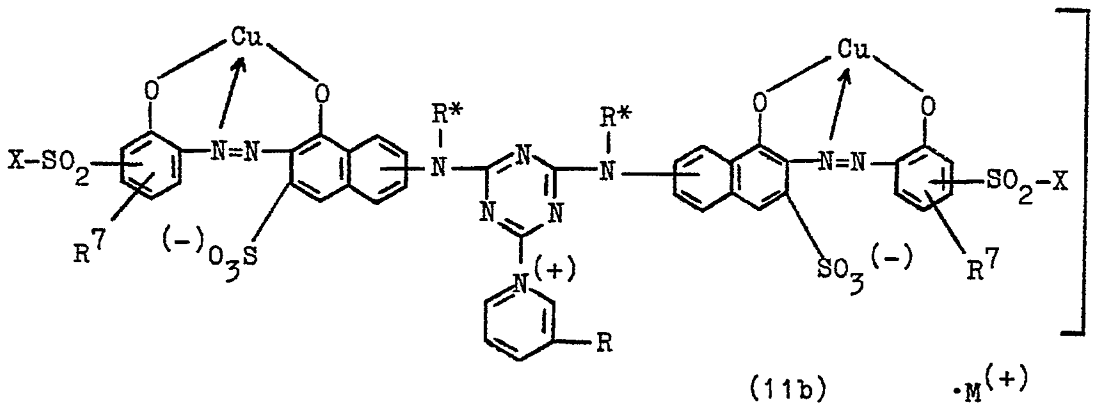

(11b) $\cdot M^{(+)}$

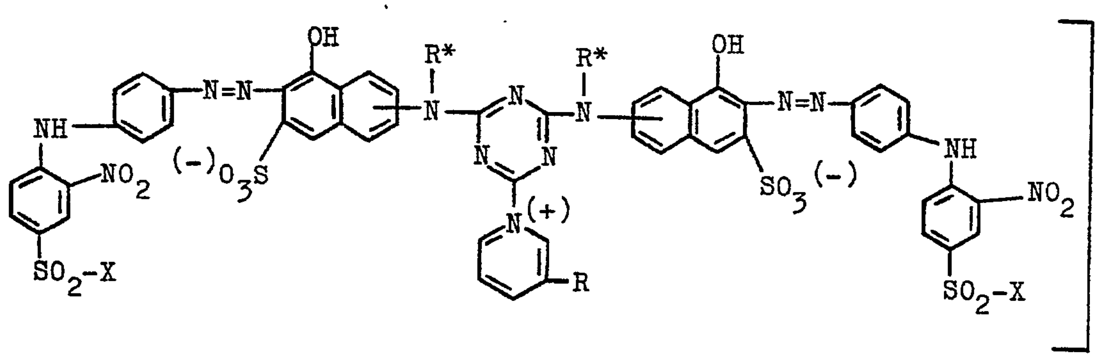

(11c) $\cdot M^{(+)}$

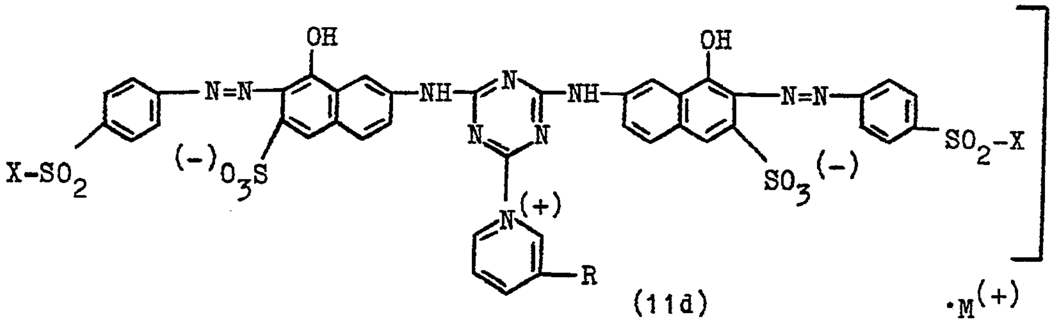

(11d)

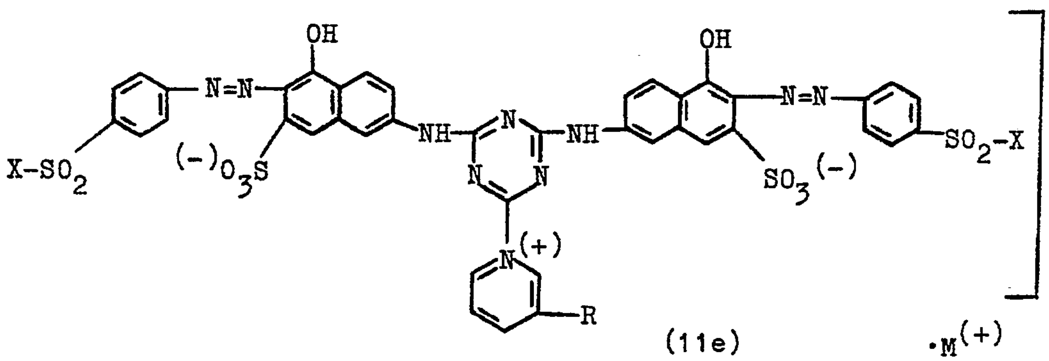

(11e)

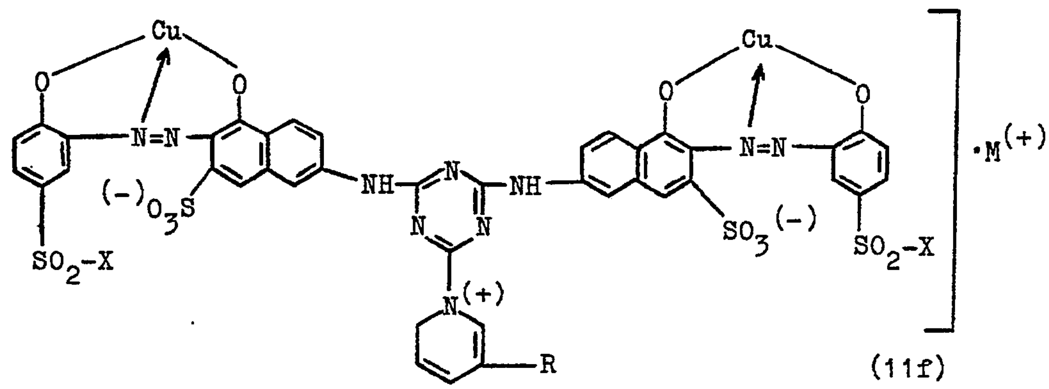

(11f)

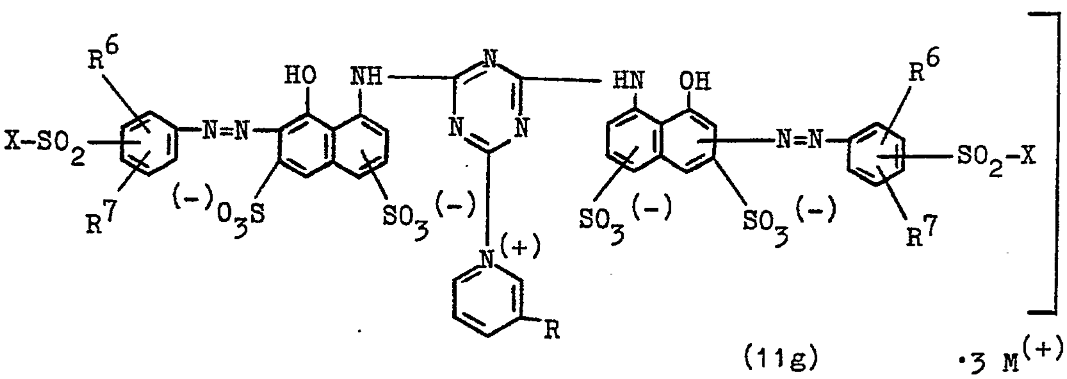

(11g)

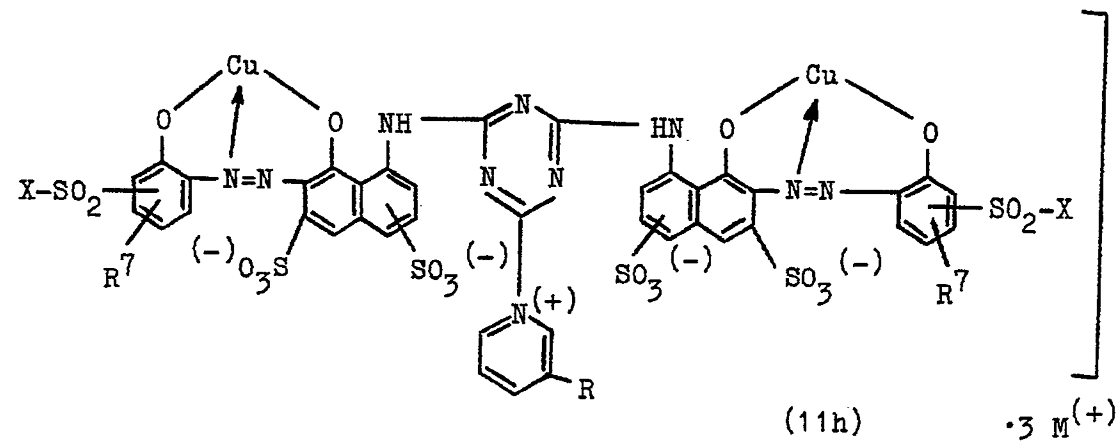

(11h) $\cdot 3\ M^{(+)}$

in welchen M, R und R* die obengenannten Bedeutungen haben, X für die Vinylgruppe oder bevorzugt die β-Sulfatoethyl-Gruppe steht, $R^6$ ein Wasserstoffatom, ein Chloratom, ein Bromatom oder eine Methyl-, Methoxy-, Carboxy- oder Sulfogruppe bedeutet und $R^7$ ein Wasserstoffatom oder eine Methyl-, Methoxy-, Nitro- oder Sulfogruppe ist.

Die erfindungsgemäßen Verbindungen können in Form ihrer freien Säure und in Form ihrer Salze, insbesondere der neutralen Salze, vorliegen. Bevorzugt sind sie in Form ihrer Salze, insbesondere ihrer Alkalisalze. Sie finden bevorzugt in Form dieser Salze ihre Verwendung zum Färben und Bedrucken von hydroxy- und/oder carbonamidgruppenhaltigen Fasermaterialien.

Die vorliegende Erfindung betrifft weiterhin Verfahren zur Herstellung der erfindungsgemäßen Verbindungen. Die erfindungsgemäßen Verbindungen können hergestellt werden, indem man eine Verbindung der allgemeinen Formel (7)

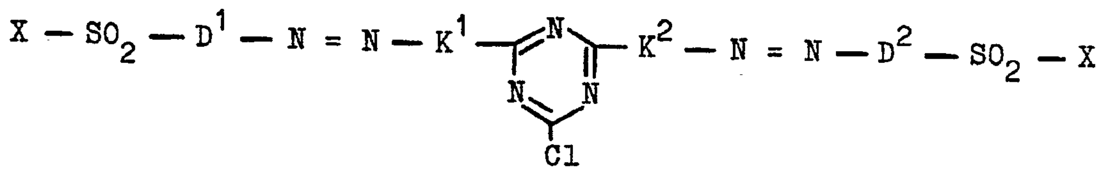

(7)

in welcher $D^1$, $D^2$, $K^1$, $K^2$ und X die für Formel (1) angegebenen Bedeutungen haben oder, falls man von 1:1-Kupferkomplex-Ausgangsverbindungen entsprechend der allgemeinen Formel (7) ausgeht, $D^1$ oder $D^2$ oder beide die für D* angegebenen Bedeutungen haben und in $K^1$ und $K^2$ die jeweilige naphtholische Hydroxygruppe als Oxigruppe mit dem Kupferatom komplex gebunden ist, mit Nicotinsäure oder Nicotinsäureamid umsetzt. Diese Umsetzung erfolgt analog den für diesen Reaktionstyp üblichen Verfahrensmaßnahmen, wie sie beispielsweise in der bereits anfangs genannten europäischen Patentanmeldungs-Veröffentlichung Nr. 0 167 219 erwähnt sind. Bevorzugt erfolgt die erfindungsgemäße Umsetzung in wäßrigem Medium bei einem pH-Wert zwischen 4 und 6, insbesondere zwischen 4 und 5, und bevorzugt bei einer Temperatur zwischen 60 und 100°C, bevorzugt zwischen 80 und 90°C.

Die Ausgangsverbindungen der allgemeinen Formel (7) sind aus der anfangs bereits erwähnten britischen Patentschrift Nr. 2 007 698 B im wesentlichen bekannt oder können analog den dort gemachten Angaben synthetisiert werden.

Die erfindungsgemäßen 1:1-Kupferkomplex-Disazoverbindungen können erfindungsgemäß auch in der Weise hergestellt werden, daß man eine Disazoverbindung, die der allgemeinen Formel (1) entspricht und in welcher $D^1$ oder $D^2$ oder beide für den Formelrest D* stehen, wobei D* einen Benzolring bedeutet, der in ortho-Stellung zur Azogruppe eine Hydroxygruppe enthält und neben der Gruppe $-SO_2X$ noch zusätzlich durch eine Methyl-, Ethyl-, Methoxy-, Ethoxy-, Sulfo- oder Carboxygruppe oder ein Chlor- oder Bromatom substituiert sein kann, oder ein Naphthalinring ist, der in ortho-Stellung zur Azogruppe eine Hydroxygruppe enthält, mit einem kupferabgebenden Mittel, wie einem anorganischen Kupfer(II)-salz, wie Kupfersulfat und Kupferchlorid, oder einem basischen Kupfersalz, wie Kupfer-oxi-carbonat, in bevorzugt wäßriger Lösung bei einem pH-Wert zwischen 4 und 6 und bei einer Temperatur zwischen 10 und 80°C umsetzt. Verfahrensweisen der Kupferkomplexbildung von o,o'-Dihydroxy-Azoverbindungen sind in der Literatur zahlreich beschrieben und dem Fachmann bekannt.

In gleicher Weise kann man von solchen Ausgangsazoverbindungen ausgehen, die anstelle der orthoständigen Hydroxygruppe in D* eine Methoxy- oder Ethoxygruppe enthalten, indem die Alkoxygruppe in üblicher Weise durch entalkylierende Kupferungsreaktion, so durch Umsetzung mit einem kupferabgebenden Mittel bei einem pH-Wert zwischen 4 und 5 und einer Temperatur zwischen 80 und 120°C in wäßrigem Medium, in die komplexbildende Hydroxygruppe übergeführt wird, die mit dem vorhandenen Kupferion die Komplexbildung eingeht.

Ebenso kann man von solchen Ausgangsazoverbindungen ausgehen, die anstelle der ortho-ständigen Hydroxygruppe in D* ein Wasserstoffatom enthalten, indem man diese mit Hilfe der oxidativen Kupferungsreaktion als die dritte zur Überführung von metallfreien Azoverbindungen in deren Kupferkomplexverbindungen üblichen und als solche bekannten Verfahrensweise in die erfindungsgemäßen Kupferkomplexverbindungen überführt, so beispielsweise in wäßrigem Medium mittels Wasserstoffperoxid in Gegenwart von Kupfer(II)-salzen bei einer Temperatur von 20 bis 60°C.

Solche Verfahrensweisen der Kupferkomplexbildung sind in der Literatur zahlreich beschrieben.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der faserreaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken) von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aufbringt und sie auf dem Material mittels Wärme und/oder mit Hilfe eines säurebindenden Mittels - beim Färben von hydroxygruppenhaltigen Materialien vorzugsweise bei einem pH-Wert zwischen 8 und 11 und bei einer Temperatur zwischen 15 und 120°C, vorzugsweise zwischen 20 und 80°C, - fixiert.

Die erfindungsgemäßen Verbindungen haben zudem den großen Vorteil, wie anfangs bereits erwähnt, daß sie hydroxygruppenhaltige Fasermaterialien, wie Cellulosefasermaterialien, aus wäßriger Flotte, wie bevorzugt im wäßrigen Färbebad nach einem Ausziehverfahren, bereits in einem schwach sauren pH-Bereich von 5 und größer als 5, wie bei einem pH-Wert zwischen 5 und 7, d.h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150°C, bevorzugt bei einer Temperatur von 120 bis 135°C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen (Hochtemperatur-Neutral-Färbeweise), die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-Cellulosetriacetatfaser- und Cellulose-Polyacrylnitrilfaser- und insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen, mit einem (oder mehreren) Dispersionsfarbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150°C, bevorzugt bei einer Temperatur von 120 bis 135°C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch den Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat- und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften

(diese Echtheitseigenschaften sind in jedem Falle vorhanden, wenn die erfindungsgemäßen Azoverbindungen auf den Cellulosefasermaterialien nach den üblichen Verfahrensweisen der Applikation und Fixierung für faserreaktive Farbstoffe im alkalischen Bereich angewendet werden). Von den guten Gebrauchs- und Fabrikationsechtheiten sind insbesondere die guten Lichtechtheiten sowohl der trockenen als auch der feuchten, mit Trinkwasser oder einer alkalischen Schweißlösung imprägnierten Cellulosefärbung, weiterhin von den Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügelecht-, Reib- und Sublimierechtheiten von Färbungen auf Cellulosefasematerialien hervorzuheben, die mit den erfindungsgemäßen Azoverbindungen nicht nur bei Anwendung der Verfahrensweisen für faserreaktive Farbstoffe, sondern auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden. Die in den Beispielen für die erfindungsgemäßen Azoverbindungen genannten Absorptionsmaxima ($\lambda_{max}$-Werte) wurden aus wäßriger Lösung der Alkalimetallsalze ermittelt.

<u>Beispiel 1</u>

a) 28,1 Teile 3-(β-Sulfatoethylsulfonyl)-anilin werden in 140 Teilen Wasser und 60 Teilen Eis suspendiert und durch Zugabe von 6,3 Teilen Natriumcarbonat bei einem pH-Wert von 6 gelöst. Man gibt 20 Teile einer wäßrigen 5n-Natriumnitritlösung hinzu und läßt das Ganze bei 0 bis 5°C in ein Gemisch aus 150 Teilen Eis und 30 Teilen einer 31%igen wäßrigen Salzsäure unter Rühren einlaufen. Man rührt noch eine Stunde nach und entfernt überschüssige salpetrige Säure mit etwas Amidosulfonsäure.
In einem getrennten Ansatz wird eine Lösung von 9,3 Teilen Cyanurchlorid in 30 Teilen Aceton unter gutem Rühren in 250 Teile Wasser eingegossen. Hierzu gibt man bei 20°C eine neutrale Lösung von 23,9 Teilen 2-Amino-8-naphthol-6-sulfonsäure in 120 Teilen Wasser, stellt den pH-Wert auf 1,5 bis 2,5 und rührt eine Stunde nach. Sodann erhöht man die Reaktionstemperatur des Gemisches auf 40 bis 50°C unter gleichzeitiger Erhöhung des pH-Wertes auf 5 mittels Natriumcarbonat und rührt noch kurze Zeit nach.
Zu dieser Lösung des Kondensationsproduktes gibt man die anfangs hergestellte Diazoniumsalzlösung; die Kupplungsreaktion wird bei einem pH-Wert von 5 bis 6 durchgeführt und die erhaltene Monochlortriazin-Disazoverbindung mittels Natriumchlorid ausgesalzen und abfiltriert.

b) Der feuchte Filterkuchen der unter a) erhaltenen Disazoverbindung wird in 500 Teilen Wasser gelöst und mit 9,2 Teilen Nicotinsäureamid und 30 Teilen Natriumacetat versetzt; mittels Eisessig wird ein pH-Wert von 4,3 eingestellt und der Reaktionsansatz unter Rühren drei Stunden bei Siedetemperatur gehalten. Anschließend läßt man den Ansatz abkühlen, salzt die gebildete Verbindung mit Kaliumchlorid aus und isoliert und trocknet sie unter reduziertem Druck bei 60 bis 80°C.

Man erhält ein elektrolythaltiges orangerotes Pulver mit dem Alkalimetallsalz (vorwiegend Kaliumsalz) der Verbindung der Formel

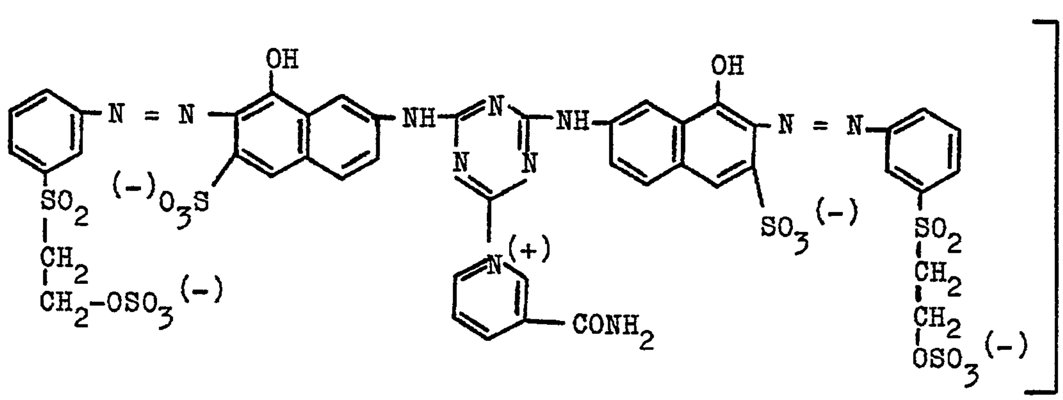

($\lambda_{max}$ = 478 nm). $\cdot 3\ H^{(+)}$

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applikations- und Fixierverfahren. Beispielsweise erhält man auf Baumwolle kräftige orangerote Färbungen und Drucke mit guten Echtheiten (s. Anwendungsbeispiel 2).

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 110 und 130°C, anwenden (s. Anwendungsbeispiel 1).

Beispiel 2

Man kuppelt die Diazoniumverbindung aus 41,1 Teilen 2-Amino-6-(β-sulfatoethylsulfonyl)-naphthalin-1-sulfonsäure in üblicher Weise mit einem sekundären Kondensationsprodukt aus Cyanurchlorid und 2-Amino-5-naphthol-7-sulfonsäure analog den Angaben des Beispieles 1 und setzt die so erhaltene Monochlortriazin-Disazoverbindung analog den Angaben des Beispieles 1 mit 9,2 Teilen Nicotinsäureamid um. Die erhaltene erfindungsgemäße Disazoverbindung wird durch Aussalzen isoliert.
Man erhält ein elektrolythaltiges orangerotes Pulver mit dem Alkalimetallsalz der Verbindung der Formel

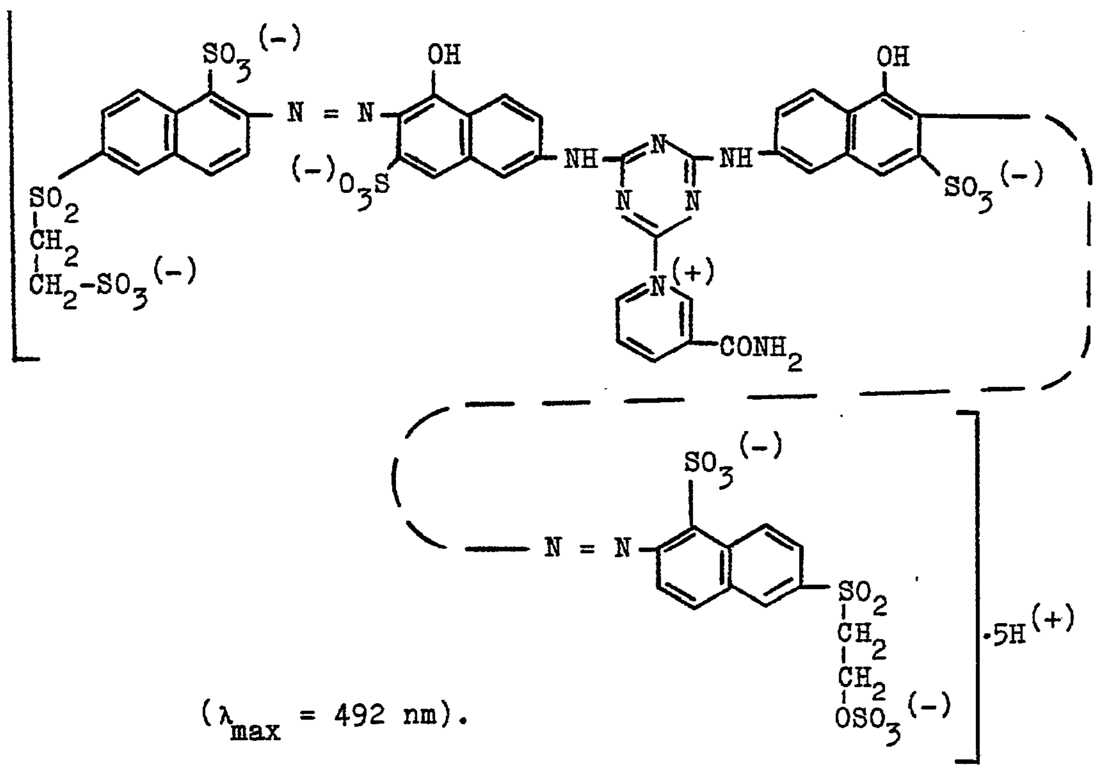

($\lambda_{max}$ = 492 nm).

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applications- und Fixierverfahren. Man erhält bspw. auf Cellulosefasermaterialien analog dem Anwendungsbeispiel 2 kräftige orange Färbungen und Drucke mit guten Echtheiten.

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 110 und 130°C, wie analog dem Anwendungsbeispiel 1, einsetzen.

Beispiel 3

Zur Herstellung einer erfindungsgemäßen Vinylsulfonyl-Disazoverbindung stellt man eine wäßrige Lösung der erfindungsgemäßen Disazoverbindung des Beispieles 2 mit einer wäßrigen konzentrierten Natronlauge auf einen pH-Wert zwischen 11 und 12 und rührt diese alkalische Lösung unter Einhaltung dieses pH-Bereiches 1 bis 5 Minuten bei 25°C. Anschließend stellt man mittels Essigsäure einen pH-Wert von 5 ein und isoliert die erfindungsgemäße Disazoverbindung der Formel

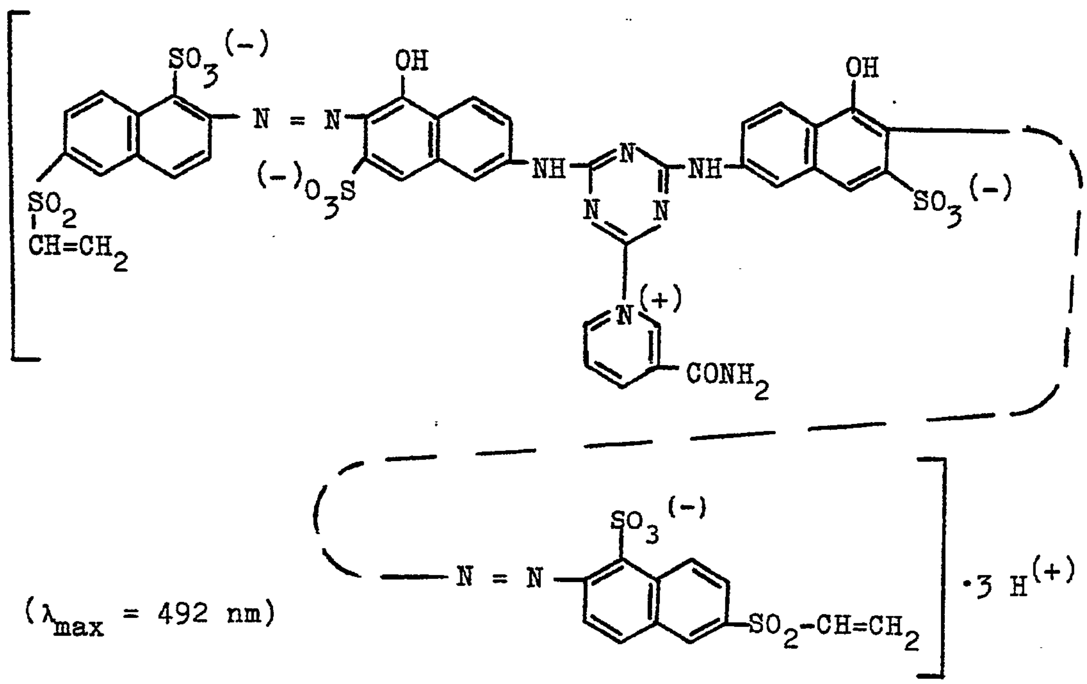

($\lambda_{max}$ = 492 nm)

als Alkalimetallsalz. Diese erfindungsgemäße Verbindung besitzt ebenfalls gute färberische Eigenschaften und liefert farbstarke, echte Färbungen von gleich guter Qualität nach den Färbeweisen des Anwendungsbeispieles 1 oder 2, wobei jedoch auf den Zusatz der Pufferlösung verzichtet werden kann, mit guten Echtheiten.

Beispiel 4

a) 36 Teile 2-Brom-4-(β-sulfatoethylsulfonyl)-anilin werden in üblicher Weise diazotiert und in wäßriger Lösung mit 23,9 Teilen 2-Amino-5-naphthol-7-sulfonsäure bei einem pH-Wert zwischen 5 und 6 gekuppelt. Die gebildete Azoverbindung wird mit Kaliumchlorid ausgesalzen, isoliert und mehrmals mit einer wäßrigen Kaliumchloridlösung nachgewaschen. Der feuchte Filterrückstand wird sodann in 700 Teilen Wasser gelöst und während 30 Minuten in ein Gemisch aus 9,3 Teilen Cyanurchlorid und 100 Teilen Eis eingerührt. Man rührt das Reaktionsgemisch bei einem pH-Wert zwischen 1,5 und 3 30 Minuten nach, erhöht sodann dessen Reaktionstemperatur auf 40 bis 50°C und führt die Umsetzung bei einem pH-Wert zwischen 4 und 5 unter entsprechender Zugabe von Natriumbicarbonat weiter, bis zur Einhaltung dieses pH-Bereiches kein Natriumbicarbonat mehr zugegeben werden muß. Die Reaktionslösung wird anschließend mit 20 % Natriumchlorid, bezogen auf das Volumen der Reaktionslösung, versetzt, und die ausgefallene elektrolythaltige Monochlor-Disazoverbindung wird abfiltriert und getrocknet.

b) Die Monochlortriazin-Disazoverbindung von a) wird in 500 Teilen Wasser gelöst. Die Lösung versetzt man mit 9,2 Teilen Nicotinsäureamid, sodann mit 5 Teilen 85%iger ortho-Phosphorsäure, stellt den pH mit Natriumcarbonat auf einen Wert von 4,5 ein und erhitzt das Reaktionsgemisch drei Stunden am Rückfluß. Nach Abkühlen wird die erfindungsgemäße Disazoverbindung durch Aussalzen mit Kaliumchlorid oder Natriumchlorid isoliert. Sie besitzt, in Form der freien Säure geschrieben, die Formel

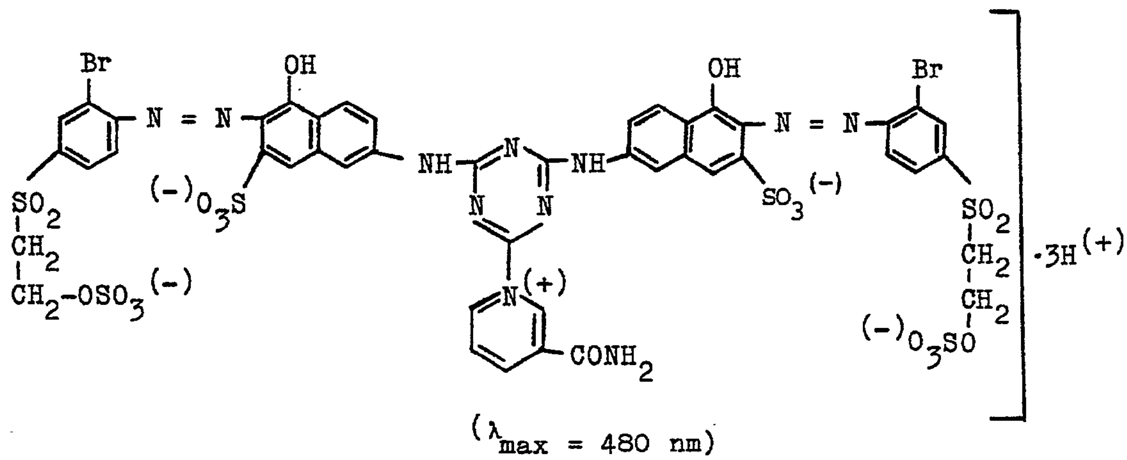

($\lambda_{max}$ = 480 nm)

und zeigt ebenfalls sehr gute faserreaktive Farbstoffeigenschaften. Sie kann sowohl im alkalischen Färbebad gemäß den üblichen Applikations- und Fixierverfahren für faserreaktive Farbstoffe als auch im schwach sauren bis neutralen Bereich, wie beispielsweise analog dem Anwendungsbeispiel 1, zum Färben von Cellulosefasermaterialien eingesetzt werden. Hierbei werden farbstarke orangerote Färbungen mit guten Echtheiten erhalten.

Beispiel 5

Man verrührt 9,5 Teile Cyanurchlorid und 31,9 Teile 1-Amino-3,6-disulfo-8-naphthol in 200 Teilen Wasser zunächst bei einer Temperatur zwischen 0 und 10°C und bei einem pH-Wert zwischen 1,5 und 2,5 während zwei Stunden, erhöht sodann die Reaktionstemperatur auf 40 bis 50°C und den pH-Wert auf 4 bis 5 mittels Natriumcarbonat und führt die zweite Kondensationsreaktion zu Ende. Das Reaktionsgemisch wird sodann mit 14,3 Teilen Nicotinsäure und anschließend mit 7 Teilen 85%iger Phosphorsäure versetzt. Man stellt den pH-Wert zwischen 5 und 5,5 ein und rührt das Reaktionsgemisch noch 6 Stunden bei 90 bis 98°C.

Nach Abkühlen des Reaktionsgemisches auf 20°C gibt man eine wäßrige Diazoniumsalzsuspension aus 34,1 Teilen 2,5-Dimethoxy-4-(β-sulfatoethylsulfonyl)-anilin hinzu und führt die Kupplungsreaktion bei einem pH-Wert zwischen 4 und 6 durch.

Die so hergestellte erfindungsgemäße Azoverbindung wird durch Aussalzen mit Natriumchlorid als Natriumsalz isoliert. Sie besitzt die Formel

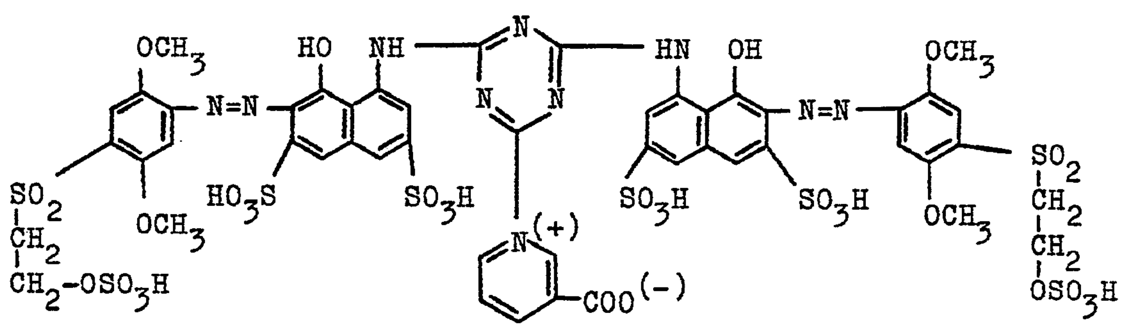

($\lambda_{max}$ = 530 nm)

und zeigt sehr gute faserreaktive Farbstoffeigenschaften. Sie liefert unter alkalischen Fixierbedingungen gemäß den üblichen Färbe- und Druckverfahren für faserreaktive Farbstoffe insbesondere auf Baumwolle farbstarke violette Färbungen und Drucke mit guten Echtheiten.

Ebenso erhält man nach dem sogenannten Hochtemperatur-Neutral-Färbeverfahren (HTN-Verfahren) bei einem pH-Wert zwischen 6 und 7 und einer Temperatur zwischen 120 und 140°C, wie bspw. analog dem Anwendungsbeispiel 1 oder 4, auf Cellulosefasermaterialien farbstarke violette Färbungen, die die gleichen guten Echtheiten aufweisen.

Beispiel 6

Man löst 33,1 Teile der erfindungsgemäßen Disazoverbindung des Beispieles 5 zusammen mit 15 Teilen kristallinem Kupfer(II)-sulfat und 20 Teilen kristallinem Natriumacetat in 500 Teilen Wasser und stellt den pH auf einen Wert von 4,5 bis 5, erhitzt den Ansatz zum Sieden und führt die Umsetzung bei Siedetemperatur noch 10 bis 15 Stunden unter Rühren fort. Anschließend klärt man den heißen Ansatz und setzt dem Filtrat Kaliumchlorid in einer Menge von 20 %, bezogen auf das Volumen der Lösung, zu und rührt bis zum Abkühlen auf Raumtemperatur. Die ausgefallene Verbindung wird abfiltriert und getrocknet.

Es wird die erfindungsgemäße Kupferkomplex-Disazoverbindung der Formel

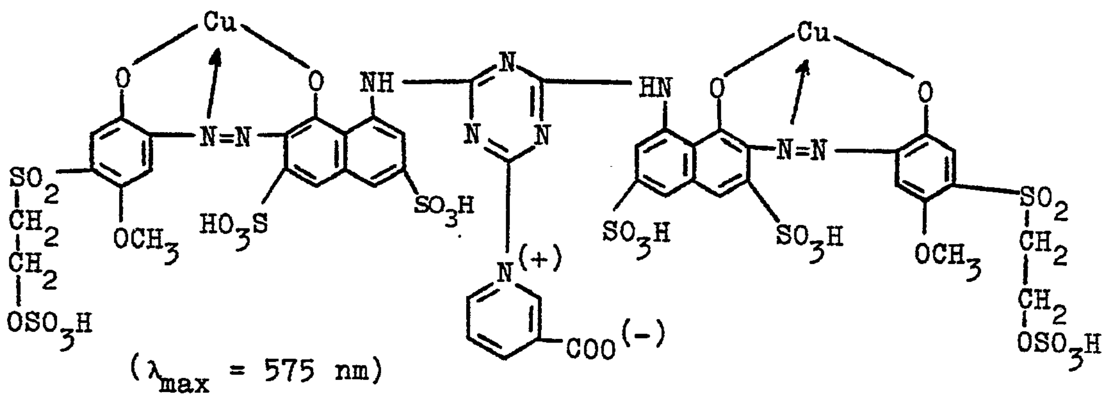

($\lambda_{max}$ = 575 nm)

in Form ihres Alkalimetallsalzes (vorwiegend Kaliumsalzes) erhalten. Sie besitzt sehr gute faserreaktive Farbstoffeigenschaften und färbt insbesondere Cellulosefasermaterialien sowohl nach den in der Technik für faserreaktive Farbstoffe üblichen Applikations- und Fixierverfahren, d.h. unter Anwendung von alkalisch wirkenden Mitteln, so in einem Färbebad bei einer Färbetemperatur zwischen 40 und 80°C und einem pH-Wert zwischen 9 und 11, als auch unter schwach sauren bis schwach alkalischen Färbebedingungen und Temperaturen oberhalb 100°C (bspw. gemäß Anwendungsbeispiel 5) in kräftigen stark rotstichig blauen Tönen mit guten Echtheiten, wie insbesondere sehr guten Licht- und Naßlichtechtheiten.

Beispiel 7

Man setzt unter Rühren 9,5 Teile Cyanurchlorid mit 12,6 Teilen 2-Methylamino-5-naphthol-7-sulfonsäure in 300 Teilen Wasser bei einer Temperatur von etwa 10°C und einem pH-Wert von 2 bis 2,5 während 1 bis 2 Stunden zunächst zum Monokondensationsprodukt um und gibt sodann weitere 12,6 Teile 2-Methylamino-5-naphthol-7-sulfonsäure hinzu, erhöht den pH durch Zugabe von Natriumcarbonat auf einen Wert von 5, erwärmt das Reaktionsgemisch auf 40 bis 50°C und rührt noch 2 bis 3 Stunden bis zum Erreichen eines konstanten pH-Wertes von 5 nach. Sodann gibt man 9,3 Teile Nicotinsäureamid hinzu, stellt den pH-Wert mittels 10 Teilen sekundären Natriumphosphat und wenig Salzsäure auf einen pH von 5 ein und führt die dritte Kondensationsreaktion unter Sieden während 3 bis 5 Stunden durch.

Nach erfolgter Umsetzung fügt man dem Ansatz die wäßrige Suspension eines in üblicher Weise hergestellten Diazoniumsalzes aus 14,9 Teilen 2-Amino-4-(β-sulfatoethylsulfonyl)-phenol hinzu und führt die Kupplungsreaktion bei einem pH-Wert zwischen 5 und 7 und einer Temperatur zwischen 10 und 20°C unter Rühren für einige Stunden durch. Die erhaltene Disazoverbindung wird in die Kupferkomplexverbindung überführt, indem man den Ansatz mit 22 Teilen basischem Kupfer(II)-carbonat versetzt und die Kupferkomplexbildung bei 50°C während einer Stunde durchführt. Anschließend wird das Reaktionsgemisch geklärt und die gebildete erfindungsgemäße Kupferkomplex-Disazoverbindung aus dem Filtrat mit Kaliumchlorid in einer Menge von 10%, bezogen auf das Volumen des Filtrates, ausgesalzen.

Die in Form ihres Alkalimetallsalzes (vorwiegend Kaliumsalzes) erhaltene Verbindung der Formel (in Form der freien Säure geschrieben)

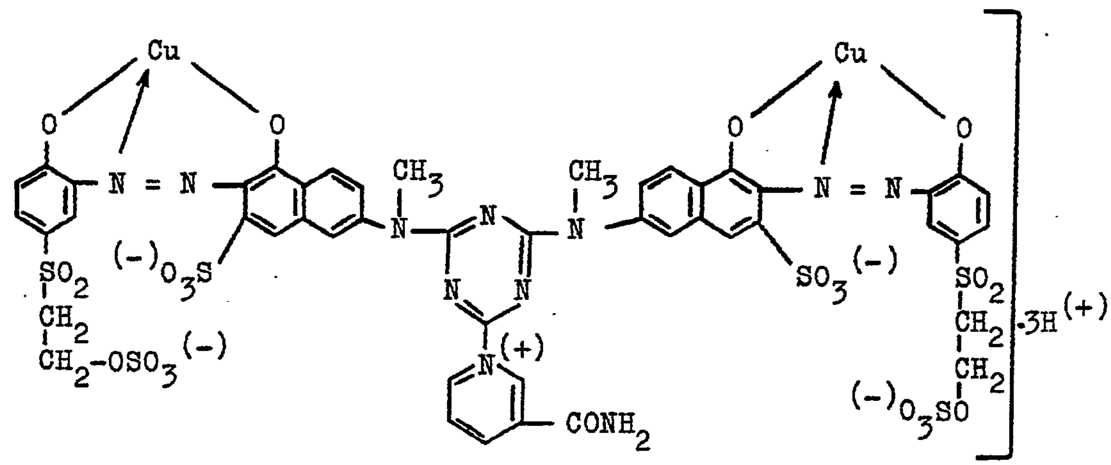

($\lambda_{max}$ = 506 nm)

zeigt sehr gute faserreaktive Farbstoffeigenschaften und färbt Cellulosefasermaterialien sowohl im alkalischen Bereich nach den üblichen, für faserreaktive Farbstoffe angewandten Applikations- und Fixiermethoden als auch im schwach sauren bis schwach alkalischen Bereich unter den in der Beschreibung angegebenen Bedingungen des HTN-Verfahrens in farbstarken, klaren roten Tönen mit guten Echtheiten, insbesondere sehr guten Licht- und Naßechtheiten. Beim Färben von Cellulosefasermaterialien aus wäßrigem Bad bei Temperaturen zwischen 120 und 130°C im schwach sauren bis schwach alkalischen pH-Bereich (pH 4 bis 8) werden über den gesamten pH-Bereich Färbungen von praktisch gleicher Qualität und Farbstärke erhalten. Die erfindungsgemäße Kupferkomplex-Disazoverbindung zeigt außerdem einen guten Farbaufbau.

Beispiel 8

Man setzt zunächst 9,5 Teile Cyanurchlorid mit 11,9 Teilen 2-Amino-8-naphthol-6-sulfonsäure in wäßriger Lösung bei etwa 10°C und einem pH-Wert von 2 um und gibt nach Beendigung dieser Monokondensationsreaktion eine wäßrige Lösung von 15,9 Teilen 1-Amino-8-naphthol-4,6-disulfonsäure hinzu, erwärmt den Ansatz auf 40 bis 60°C und führt die zweite Kondensationsreaktion innerhalb dieses Temperaturbereiches bei einem pH-Wert zwischen 4 und 6 durch, bis keine Ausgangsverbindungen mehr nachweisbar sind, was durch Titration der Aminogruppen oder durch Dünnschichtchromatographie oder Hochdruck-Flüssigkeits-Chromatographie (HPLC) erfolgen kann. Anschließend gibt man 12,2 Teile Nicotinsäure hinzu und führt die dritte Kondensationsreaktion bei einem pH-Wert zwischen 4 und 5 und einer Temperatur von 90°C während etwa 5 bis 6 Stunden durch.

Anschließend gibt man die wäßrige Suspension des in üblicher Weise hergestellten Diazoniumsalzes von 28,1 Teilen 4-β-Sulfatoethylsulfonyl-anilin - nach Abkühlung des Kondensationsansatzes - hinzu und führt die Kupplungsreaktion bei einer Temperatur zwischen 10 und 20°C und einem pH zwischen 5 und 6 durch. Nach einer Klärfiltration wird die erfindungsgemäße Verbindung in üblicher Weise isoliert.

Man erhält das Alkalimetallsalz der Verbindung der Formel

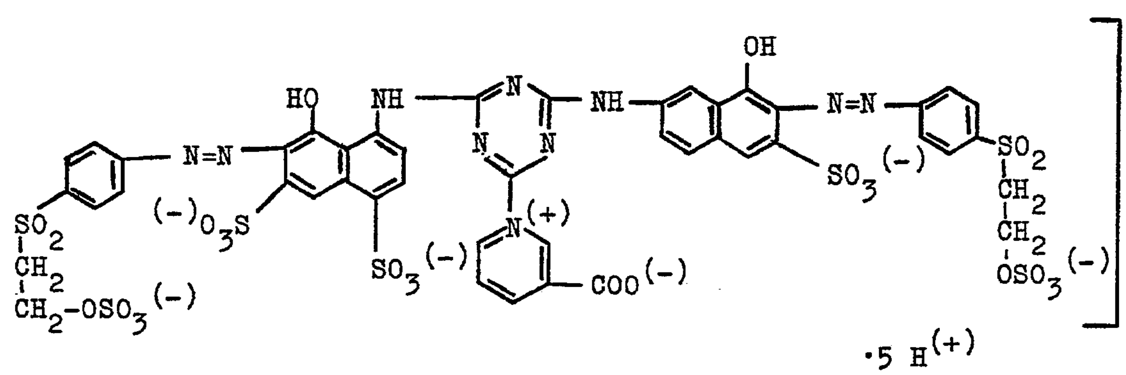

die sehr gute faserreaktive Farbstoffeigenschaften zeigt und auf Cellulosefasermaterialien sowohl nach dem Hochtemperatur-Neutral-Färbeverfahren bei einem pH-Wert zwischen 4 und 8 und einer Temperatur zwischen 120 und 140°C aus wäßrigem Bad als auch bei Anwesenheit von alkalisch wirkenden Mitteln nach den für faserreaktive Farbstoffe bekannten Färbe- und Druckverfahren, bei einem pH-Wert zwischen 9 und 11 und einer Temperatur zwischen 60 und 80°C aus wäßrigem Färbebad, farbstarke rote Färbungen und Drucke mit guten Fabrikations- und Gebrauchsechtheiten liefert.

Beispiele 9 bis 48

In den nachfolgenden Tabellenbeispielen sind weitere erfindungsgemäße Disazoverbindungen mit Hilfe der Formelglieder entsprechend einer allgemeinen Formel (A)

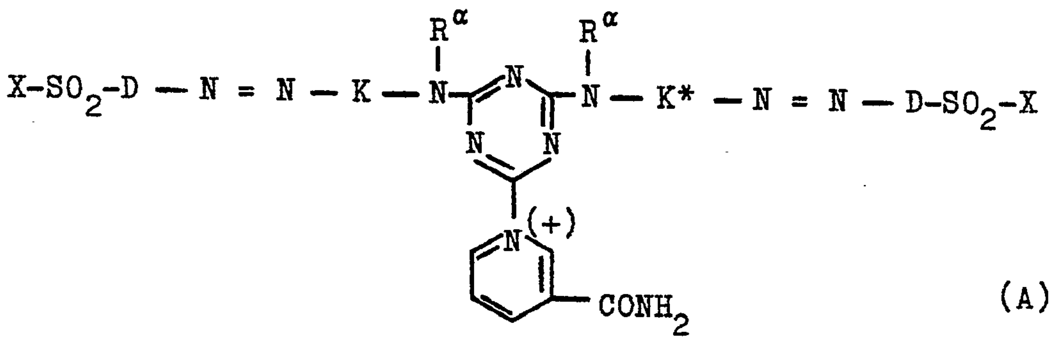

(A)

beschrieben, wobei der Formelrest K den in der Tabelle "spiegelbildlich" geschriebenen Rest von K* darstellt. Die erfindungsgemäßen Verbindungen lassen sich in erfindungsgemäßer Weise, wie beispielsweise anlog einem der obigen Ausführungsbeispiele, herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | Rest $R^{\alpha}$ | Rest -K*- | Rest $-D-SO_2-X$ | Farbton auf Baumwolle ($\lambda_{max}$) |
|---|---|---|---|---|
| 9 | Wasserstoff | 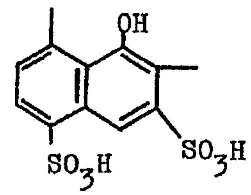 | 2-Brom-4-(ß-sulfatoethylsulfonyl)-phenyl | rot |
| 10 | Wasserstoff | 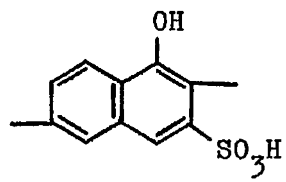 | 4-(ß-Sulfatoethylsulfonyl)-phenyl | orange (478 nm) |
| 11 | Wasserstoff | dito | 3-(ß-Sulfatoethylsulfonyl)-phenyl | orange (476 nm) |
| 12 | Wasserstoff | dito | 2-Methoxy-5-(ß-sulfatoethylsulfonyl)-phenyl | scharlach (494 nm) |
| 13 | Wasserstoff | dito | 2-Methoxy-5-methyl-4-(ß-sulfatoethylsulfonyl)-phenyl | rot (502 nm) |
| 14 | Wasserstoff | dito | 2,5-Dimethoxy-4-(ß-sulfatoethylsulfonyl)-phenyl | rot |
| 15 | Wasserstoff | dito | 4-[3'-(ß-Sulfatoethylsulfonyl)-phenyl-amidocarbonyl]-phenyl | orange (482 nm) |
| 16 | Wasserstoff | dito | 2-Brom-4-vinylsulfonylphenyl | orange (482 nm) |

| Bsp. | Rest $R^{\alpha}$ | Rest -K*- | Rest $-D-SO_2-X$ | Farbton auf Baumwolle ($\lambda_{max}$) |
|---|---|---|---|---|
| 17 | Wasserstoff | 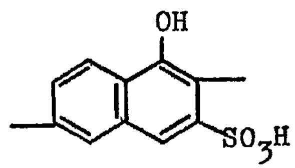 | 6-Sulfo-8-(ß-sulfatoethylsulfonyl)-naphth-2-yl | rot |
| 18 | Wasserstoff | dito | 6-(ß-Sulfatoethylsulfonyl)-naphth-2-yl | rot (498 nm) |
| 19 | Wasserstoff | dito | 4-[2'-Nitro-4'-(ß-sulfatoethylsulfonyl)-phenylamino]-phenyl | violett (510 nm) |
| 20 | Wasserstoff | dito | 2-Chlor-5-(ß-sulfatoethylsulfonyl)-phenyl | orange |
| 21 | Wasserstoff | dito | 2-Methoxy-4-(ß-sulfatoethylsulfonyl)-phenyl | rot |
| 22 | Wasserstoff | dito | 3-Methoxy-4-(ß-sulfatoethylsulfonyl)-phenyl | orange |
| 23 | Wasserstoff | dito | 8-(ß-Sulfatoethylsulfonyl)-naphth-2-yl | rot |
| 24 | Methyl | dito | 4-(ß-Sulfatoethylsulfonyl)-phenyl | orange (478 nm) |
| 25 | Methyl | dito | 2-(Methoxy-5-(ß-sulfatoethylsulfonyl)-phenyl | scharlach (494 nm) |
| 26 | Methyl | dito | 6-Sulfo-8-(ß-sulfatoethylsulfonyl)-naphth-2-yl | rot |

| Bsp. | Rest $R^{\alpha}$ | Rest -K*- | Rest $-D-SO_2-X$ | Farbton auf Baumwolle ($\lambda_{max}$) |
|---|---|---|---|---|
| 27 | Methyl | 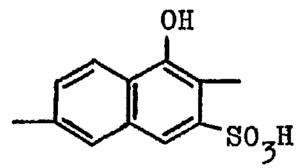 | 1-Sulfo-6-vinylsulfonyl-naphth-2-yl | scharlach (492 nm) |
| 28 | Methyl | dito | 4-[2'-Nitro-4'-(ß-sulfatoethylsulfonyl)-phenyl-amino]-phenyl | violett (510 nm) |
| 29 | Methyl | dito | 4-[3'-(ß-Sulfatoethyl-sulfonyl)-phenyl-amido-carbonyl]-phenyl | scharlach (483 nm) |
| 30 | Wasserstoff | 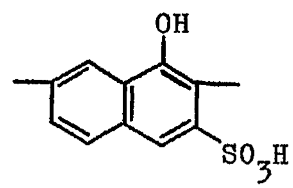 | 2-Chlor-5-(ß-sulfato-ethylsulfonyl)-phenyl | orange |
| 31 | Wasserstoff | dito | 4-(ß-Sulfatoethylsulfo-nyl)-phenyl | orange |
| 32 | Wasserstoff | dito | 2-Methoxy-5-(ß-sulfato-ethylsulfonyl)-phenyl | rot |
| 33 | Wasserstoff | dito | 2,5-Dimethoxy-4-(ß-sul-fatoethylsulfonyl)-phenyl | blaustichig rot |
| 34 | Methyl | dito | 4-(ß-Sulfatoethylsulfo-nyl)-phenyl | orange |
| 35 | Methyl | dito | 3-(ß-Sulfatoethylsulfo-nyl)-phenyl | orange |

| Bsp. | Rest $R^{\alpha}$ | Rest -K*- | Rest $-D-SO_2-X$ | Farbton auf Baumwolle ($\lambda_{max}$) |
|---|---|---|---|---|
| 36 | Wasserstoff | 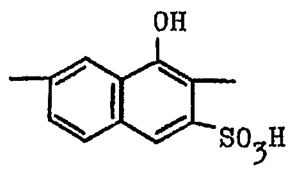 | 1-Sulfo-6-vinylsulfonyl-naphthyl-2-yl | rot |
| 37 | Methyl | dito | 4-[2'-Nitro-4'-(ß-sulfatoethylsulfonyl)-phenyl-amino]-phenyl | violett |
| 38 | Wasserstoff | dito | 2-Brom-4-(ß-sulfato-ethylsulfonyl)-phenyl | orange |
| 39 | Wasserstoff | dito | 4-[3'-(ß-Sulfatoethyl-sulfonyl)-phenyl-amido-carbonyl]-phenyl | rot |
| 40 | Wasserstoff | 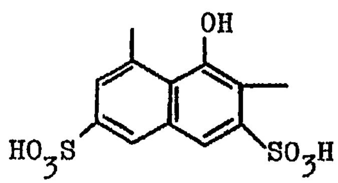 | dito | blaustichig rot (516 nm) |
| 41 | Wasserstoff | dito | 4-Vinylsulfonyl-phenyl | blaustichig rot (510 nm) |
| 42 | Wasserstoff | dito | 2-Brom-4-vinylsulfonyl-phenyl | blaustichig rot (512 nm) |
| 43 | Wasserstoff | dito | 4-[2'-Nitro-4'-(ß-sulfatoethylsulfonyl)-phenyl-amino]-phenyl | violett |

| Bsp. | Rest $R^{\alpha}$ | Rest -K*- | Rest $-D-SO_2-X$ | Farbton auf Baumwolle ($\lambda_{max}$) |
|---|---|---|---|---|
| 44 | Wasserstoff | 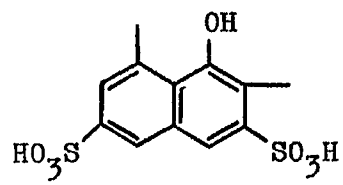 | 2-Methoxy-5-(ß-sulfatoethylsulfonyl)-phenyl | blaustichig rot |
| 45 | Wasserstoff | dito | 6-(ß-Sulfatoethylsulfonyl)-naphth-2-yl | violett (526 nm) |
| 46 | Wasserstoff | 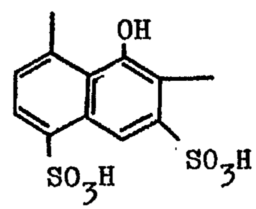 | 3-(ß-Sulfatoethylsulfonyl)-phenyl | rot |
| 47 | Wasserstoff | dito | 4-Vinylsulfonyl-phenyl | rot |
| 48 | Wasserstoff | dito | 2-Brom-4-vinylsulfonyl-phenyl | rot |

Beispiele 49 bis 74

In den nachfolgenden Tabellenbeispielen sind weitere erfindungsgemäße Disazoverbindungen mit Hilfe der Formelglieder entsprechend einer allgemeinen Formel (B)

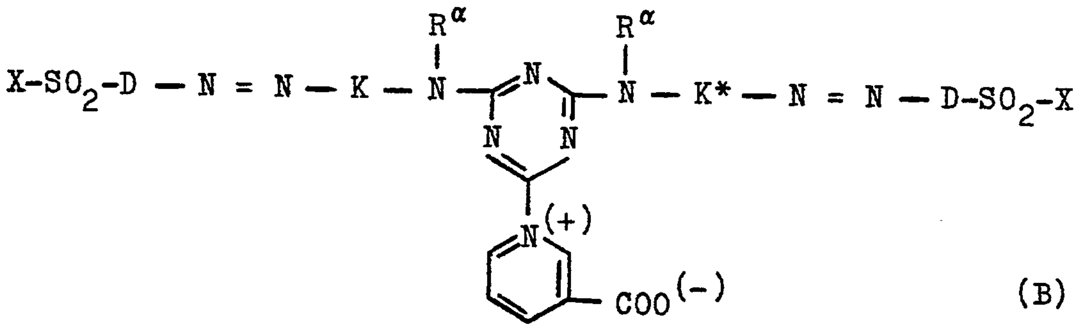

(B)

beschrieben, wobei der Formelrest K den in der Tabelle "spiegelbildlich" geschriebenen Rest von K* darstellt. Die erfindungsgemäßen Verbindungen lassen sich in erfindungsgemäßer Weise, wie beispielsweise anlog einem der obigen Ausführungsbeispiele, herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | Rest $R^{\alpha}$ | Rest -K*- | Rest $-D-SO_2-X$ | Farbton auf Baumwolle ($\lambda_{max}$) |
|---|---|---|---|---|
| 49 | Wasserstoff | 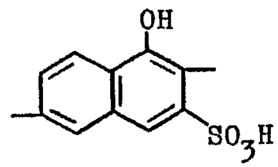 | 2-Brom-4-(ß-sulfato-ethylsulfonyl)-phenyl | orange (482 nm) |
| 50 | Methyl | dito | dito | orange (480 nm) |
| 51 | Methyl | dito | 2-Methoxy-5-(ß-sulfato-ethylsulfonyl)-phenyl | scharlach (494 nm) |
| 52 | Wasserstoff | dito | 1-Sulfo-6-(ß-sulfato-ethylsulfonyl)-naphth-2-yl | scharlach (490 nm) |
| 53 | Methyl | dito | dito | scharlach |
| 54 | Wasserstoff | dito | 4-[2'-Nitro-4'-(ß-sulfatoethylsulfonyl)-phenyl-amino]-phenyl | violett (510 nm) |
| 55 | Wasserstoff | dito | 4-[3'-(ß-Sulfatoethyl-sulfonyl)-phenyl-amido-carbonyl]-phenyl | orange (482 nm) |
| 56 | Wasserstoff | dito | 2-Methoxy-5-methyl-4-(ß-sulfatoethylsulfonyl)-phenyl | rot (500 nm) |
| 57 | Methyl | dito | dito | rot (501 nm) |
| 58 | Wasserstoff | dito | 4-(ß-Sulfatoethylsul-fonyl)-phenyl | orange (478 nm) |
| 59 | Wasserstoff | dito | 2-Brom-4-(ß-sulfato-ethylsulfonyl)-phenyl | orange |

| Bsp. | Rest $R^{\alpha}$ | Rest -K*- | Rest $-D-SO_2-X$ | Farbton auf Baumwolle ($\lambda_{max}$) |
|---|---|---|---|---|
| 60 | Wasserstoff | 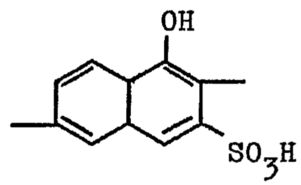 | 3-(ß-Sulfatoethylsulfonyl)-phenyl | orange (476 nm) |
| 61 | Methyl | 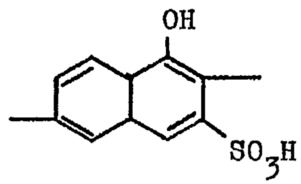 | 4-(ß-Sulfatoethylsulfonyl)-phenyl | orange |
| 62 | Methyl | dito | 2-Brom-4-(ß-sulfatoethylsulfonyl)-phenyl | orange |
| 63 | Methyl | dito | 3-Vinylsulfonyl-phenyl | orange |
| 64 | Wasserstoff | 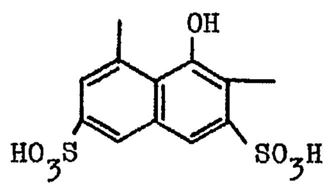 | 3-Vinylsulfonyl-phenyl | rot |
| 65 | Wasserstoff | dito | 2-Methoxy-5-vinylsulfonyl-phenyl | blaustichig rot |
| 66 | Wasserstoff | dito | 8-(ß-Sulfatoethylsulfonyl)-naphth-2-yl | blaustichig rot |

| Bsp. | Rest $R^{\alpha}$ | Rest -K*- | Rest $-D-SO_2-X$ | Farbton auf Baumwolle ($\lambda_{max}$) |
|---|---|---|---|---|
| 67 | Wasserstoff | 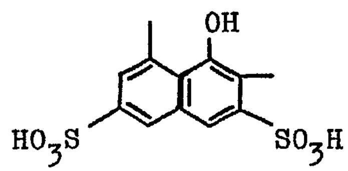 | 1-Sulfo-6-(ß-sulfatoethylsulfonyl)-naphth-2-yl | blaustichig rot |
| 68 | Wasserstoff | dito | 4-[2'-Nitro-4'-(ß-sulfatoethylsulfonyl)-phenylamino]-phenyl | violett (536 nm) |
| 69 | Wasserstoff | dito | 2-Brom-4-(ß-sulfatoethylsulfonyl)-phenyl | violett (512 nm) |
| 70 | Wasserstoff | dito | 4-[3'-(ß-Sulfatoethylsulfonyl)-phenyl-amidocarbonyl]-phenyl | blaustichig rot (516 nm) |
| 71 | Wasserstoff | dito | 2-Methoxy-5-(ß-sulfatoethylsulfonyl)-phenyl | blaustichig rot |
| 72 | Wasserstoff | 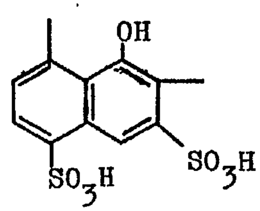 | 2-Brom-4-(ß-sulfatoethylsulfonyl)-phenyl | blaustichig rot |
| 73 | Wasserstoff | dito | 4-[2'-Nitro-4'-(ß-sulfatoethylsulfonyl)-phenylamino]-phenyl | violett |
| 74 | Wasserstoff | dito | 4-(ß-Sulfatoethylsulfonyl)-phenyl | blaustichig rot |

Beispiele 75 bis 80

In den nachfolgenden Tabellenbeispielen sind weitere erfindungsgemäße Disazoverbindungen mit Hilfe der Formelglieder entsprechend einer allgemeinen Formel (C)

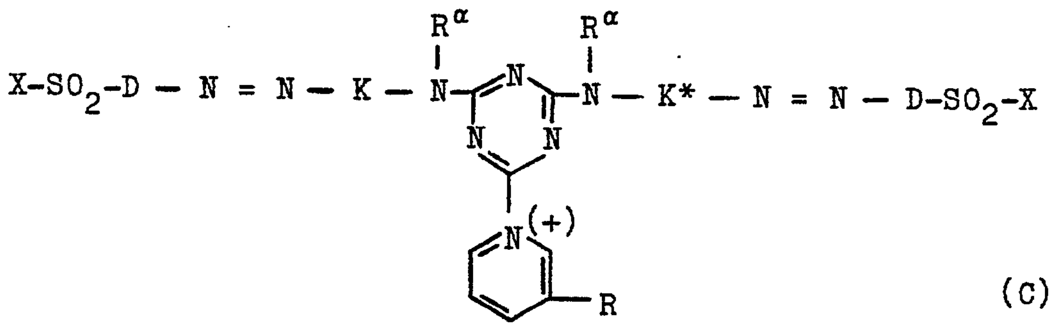

(C)

beschrieben. Die erfindungsgemäßen Verbindungen lassen sich in erfindungsgemäßer Weise, wie beispielsweise analog einem der obigen Ausführungsbeispiele, herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | R | $R^{\alpha}$ | -K- | -K*- | $-D-SO_2-X$ | Farbton auf Baumwolle |
|---|---|---|---|---|---|---|
| 75 | $-CONH_2$ | Wasserstoff | 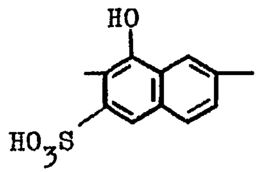 | 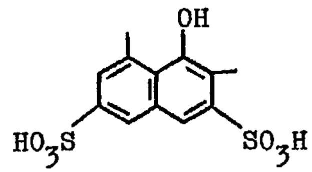 | 4-(ß-Sulfato-ethylsulfonyl)-phenyl | rot |
| 76 | $CONH_2$ | Methyl | dito | 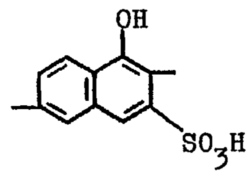 | dito | orange |
| 77 | $-CONH_2$ | Wasserstoff | dito | dito | dito | orange |
| 78 | $-CONH_2$ | dito | 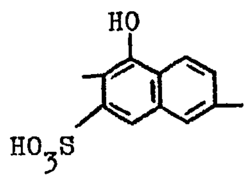 | 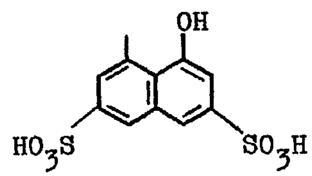 | 4-Vinylsulfo-nyl-phenyl | rot |
| 79 | $-CONH_2$ | dito | 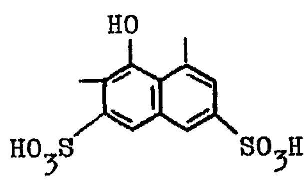 | 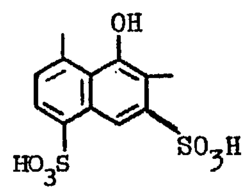 | dito | blaustichig rot |
| 80 | $-COO^{(-)}$ | dito | dito | dito | dito | blaustichig rot |

Beispiele 81 bis 108

In den nachfolgenden Tabellenbeispielen sind weitere erfindungsgemäße Kupferkomplex-Disazoverbindungen mit Hilfe der Formelglieder entsprechend einer allgemeinen Formel (D)

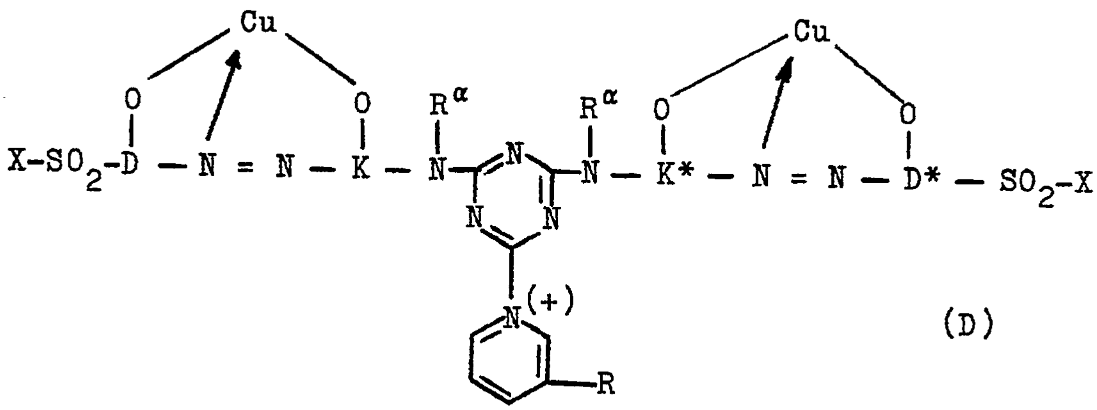

(D)

beschrieben, wobei der Formelrest K den in der Tabelle "spiegelbildlich" geschriebenen Rest von K* und der Formelrest D den in der Tabelle "spiegelbildlich" geschriebenen Rest von D* darstellt. Die erfindungsgemäßen Verbindungen lassen sich in erfindungsgemäßer Weise, wie beispielsweise analog einem der obigen Ausführungsbeispiele, herstellen. Sie besitzen gute faserreaktive Farbstoffeigenschaften und liefern sowohl in Gegenwart von alkalisch wirkenden Mitteln bei Färbetemperaturen (Fixiertemperaturen) von bis zu 100°C als auch im schwach sauren bis neutralen oder schwach alkalischen Bereich bei Temperaturen zwischen 100 und 140°C auf Cellulosefasermaterialien farbstarke, echte Färbungen und Drucke in dem in dem jeweiligen Tabellenbeispiel angegebenen Farbton.

| Bsp. | R | $R^{\alpha}$ | Rest -K*(-O-)- | Rest -(-O-)D*-$SO_2$-X | Rest X | Farbton auf Baumwolle ($\lambda_{max}$) |
|---|---|---|---|---|---|---|
| 81 | $-CONH_2$ | H | 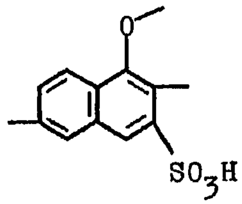 | 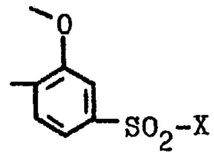 | ß-Sulfato-ethyl | violett |
| 82 | $-CONH_2$ | H | dito | 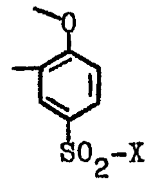 | dito | violett (506 nm) |
| 83 | $-CONH_2$ | H | dito | 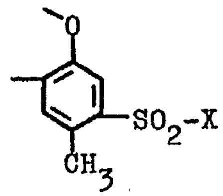 | dito | violett |
| 84 | $-CONH_2$ | H | dito | 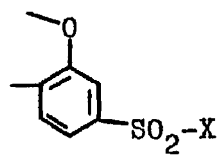 | dito | violett |
| 85 | $-CONH_2$ | H | dito | 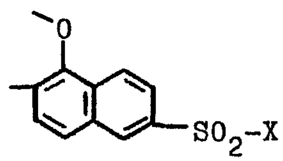 | dito | violett |

| Bsp. | R | $R^{\alpha}$ | Rest -K*(-O-)- | Rest -(-O-)D*-$SO_2$-X | Rest X | Farbton auf Baumwolle ($\lambda_{max}$) |
|---|---|---|---|---|---|---|
| 86 | -$CONH_2$ | $CH_3$ | 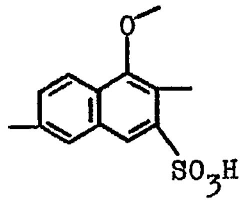 | 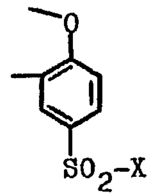 | Vinyl | violett (507 nm) |
| 87 | -$CONH_2$ | $CH_3$ | dito | dito | ß-Sulfato-ethyl | violett (508 nm) |
| 88 | -$CONH_2$ | $CH_3$ | dito | 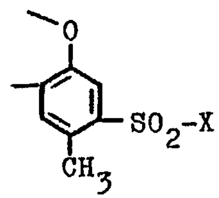 | Vinyl | violett |
| 89 | -$CONH_2$ | $CH_3$ | dito | 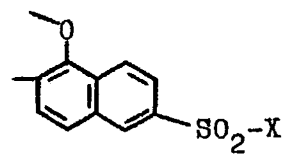 | ß-Sulfato-ethyl | violett |
| 90 | -$CONH_2$ | H | 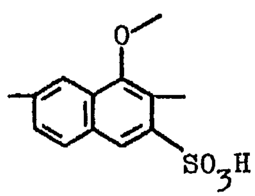 | 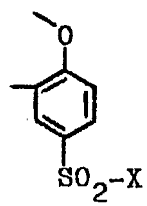 | dito | violett |

| Bsp. | R | $R^{\alpha}$ | Rest -K*(-O-)- | Rest -(-O-)D*-$SO_2$-X | Rest X | Farbton auf Baumwolle ($\lambda_{max}$) |
|---|---|---|---|---|---|---|
| 91 | $-CONH_2$ | H | 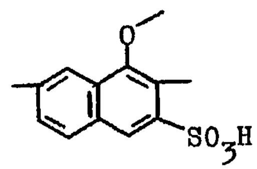 | 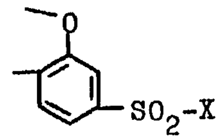 | ß-Sulfato-ethyl | violett |
| 92 | $-CONH_2$ | H | 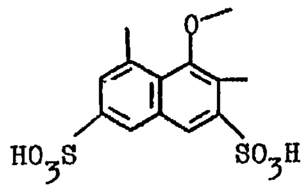 | dito | dito | blau |
| 93 | $-CONH_2$ | H | dito | 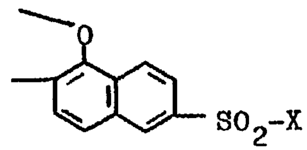 | dito | blau (536 nm) |
| 94 | $-CONH_2$ | H | dito | 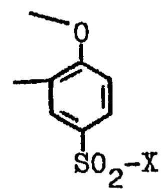 | dito | violett |
| 95 | $-CONH_2$ | H | dito | 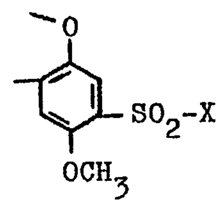 | dito | blau |

| Bsp. | R | $R^{\alpha}$ | Rest -K*(-O-)- | Rest -(-O-)D*-$SO_2$-X | Rest X | Farbton auf Baumwolle ($\lambda_{max}$) |
|---|---|---|---|---|---|---|
| 96 | $-CONH_2$ | H | 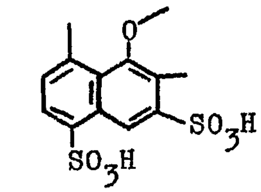 | 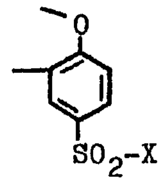 | ß-Sulfato-ethyl | violett |
| 97 | $-CONH_2$ | H | dito | 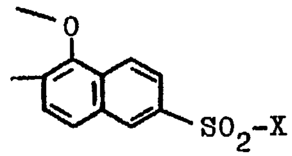 | dito | violett |
| 98 | $-COO^{(-)}$ | H | 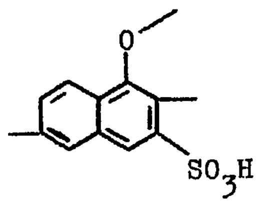 | 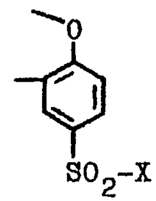 | dito | violett |
| 99 | $-COO^{(-)}$ | H | dito | dito | Vinyl | violett |
| 100 | $-COO^{(-)}$ | $CH_3$ | dito | dito | ß-Sulfato-ethyl | violett |
| 101 | $-COO^{(-)}$ | H | dito | 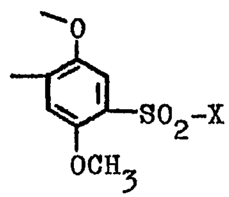 | dito | violett |

| Bsp. | R | $R^{\alpha}$ | Rest -K*(-O-)- | Rest -(-O-)D*-$SO_2$-X | Rest X | Farbton auf Baumwolle ($\lambda_{max}$) |
|---|---|---|---|---|---|---|
| 102 | $-COO^{(-)}$ | H | 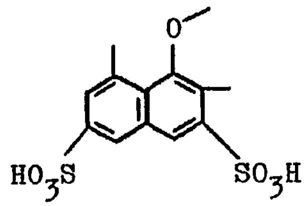 | 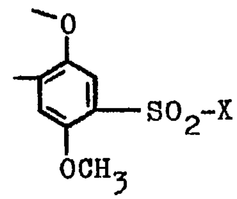 | Vinyl | violett |
| 103 | $-COO^{(-)}$ | H | dito | 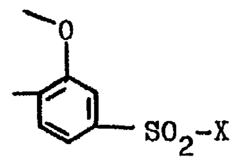 | ß-Sulfato-ethyl | blau |
| 104 | $-COO^{(-)}$ | H | dito | 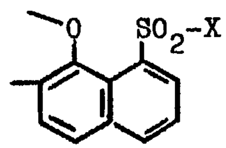 | dito | blau |
| 105 | $-COO^{(-)}$ | H | dito | 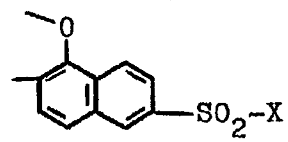 | dito | blau |
| 106 | $-COO^{(-)}$ | H | 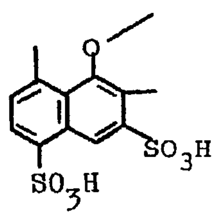 | 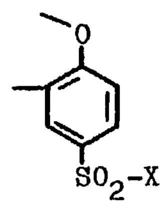 | Vinyl | violett |

Beispiel 107

Man stellt in bekannter Verfahrensweise die Monochlortriazinylamino-Disazoverbindung als Dikondensationsprodukt aus den Ausgangskomponenten Cyanurchlorid, einer Monoazoverbindung mit 2-Hydroxy-4-(β-sulfatoethylsulfonyl)-anilin als Diazokomponente und 1-Amino-3,6-disulfo-8-naphthol als Kupplungskomponente und einer zweiten Monoazoverbindung mit 2-Hydroxy-4-(β-sulfatoethylsulfonyl)-anilin als Diazokomponente und 1-Amino-4,6-disulfo-8-naphthol als Kupplungskomponente her und führt diese Monochlortriazinylamino-Disazoverbindung in wäßriger Lösung bei einer Temperatur von 50°C und einem pH-Wert von 5 mittels Kupfersulfat in ihre Monochlortriazinylamino-Kupferkomplex-Disazoverbindung über. Zu dieser Lösung der Kupferkomplexverbindung gibt man sodann die äquivalente Menge an Nicotinsäure und führt die dritte Kondensationsreaktion bei einem pH-Wert von etwa 4,5 in Gegenwart eines Natriumacetat/Eisessig-Puffers analog dem obigen Beispiel 1b durch.

Nach Aussalzen und Isolieren erhält man ein elektrolythaltiges dunkles Pulver mit dem Alkalimetallsalz der Verbindung der Formel

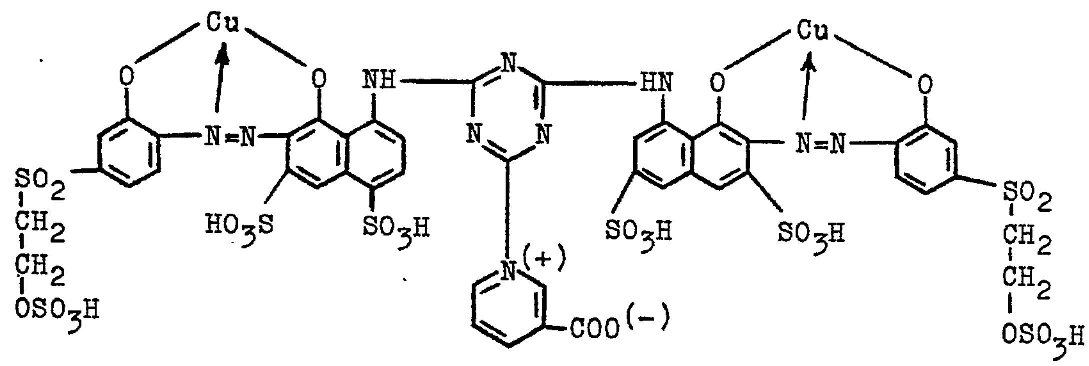

Diese Kupferkomplex-Disazoverbindung besitzt sehr gute faserreaktive Farbstoffeigenschaften und färbt insbesondere Cellulosefasermaterialien sowohl nach den in der Technik für faserreaktive Farbstoffe üblichen Applikations- und Fixierverfahren, d.h. unter Anwendung alkalischer Bedingungen, als auch nach den Anwendungsbedingungen des Hochtemperatur-Neutral-Färbeverfahrens, so bei einer Temperatur zwischen 120 und 130°C und einem pH-Wert von 6 in wäßriger Lösung, in farbstarken, echten violetten Tönen.

Anwendungsbeispiel 1

5 Teile eines Baumwollgewebes gibt man in ein Färbebad aus 0,1 Teilen der erfindungsgemäßen Disazoverbindung von Beispiel 1 (in Form des neutralen Salzes), 5 Teilen wasserfreiem Natriumsulfat, 80 Teilen Wasser und 20 Teilen einer wäßrigen Pufferlösung, die aus 20 Teilen Wasser und 2 Teilen 85%iger Phosphorsäure zubereitet und mit Natronlauge auf einen pH-Wert von 6 gestellt wird. Das Gewebe wird in dem Bad bei einer Temperatur von 130°C während 60 bis 90 Minuten behandelt. Anschließend wird die erhaltene Färbung durch Spülen mit warmem und mit heißem Wasser, durch Waschen in einem wäßrigen Bad aus 150 Teilen Wasser und 0,15 Teilen eines nichtionogenen Mittels bei Kochtemperatur während 15 Minuten und durch erneutes Spülen mit warmem Wasser nachbehandelt und getrocknet.

Es wird eine kräftige orangerote Färbung erhalten, die eine gute Lichtechtheit und gute Naßechtheiten, wie eine gute Wasser-, 60°C-Wäsche-, Schweiß- und Chlorwasser-Echtheit, desweiteren eine gute Reibechtheit besitzt. Darüberhinaus zeigt die erfindungsgemäße Verbindung einen guten Farbaufbau in diesem Färbeverfahren.

Führt man das Färbeverfahren nicht bei einem pH-Wert von 6, sondern bei einem pH-Wert von 5, von 7 oder 8 durch, so erhält man gleichgute orangerote Färbungen mit praktisch gleicher Farbstärke wie bei der bei pH 6 hergestellten Färbung.

Anwendungsbeispiel 2

Setzt man die erfindungsgemäße Disazoverbindung des Beispieles 1 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60°C oder 80°C in Gegenwart eines alkalisch wirkenden Mittels, wie Natriumcarbonat und Natronlauge, und eines Elektrolytsalzes, wie Natriumsulfat, so erhält man ebenfalls sehr farbstarke orangerote Färbungen mit guten Echtheiten, von denen insbesondere die gute Lichtechtheit und Reibechtheit und die guten Wasser-, Wasch-, Schweiß- und Chlorwasser-Echtheiten hervorgehoben werden können.

Anwendungsbeispiel 3

Man bereitet ein Färbebad aus 80 Teilen Wasser, 0,05 Teilen der erfindungsgemäßen Disazoverbindung des Beispieles 2, 5 Teilen wasserfreiem Natriumsulfat und 20 Teilen einer wäßrigen Pufferlösung, die einen pH-Wert von 6 zu halten vermag, und gibt sodann 0,1 Teile eines vordispergierten Dispersionsfarbstoffes der Colour-Index Nr. 11227 (C.I. Disperse Orange 25) sowie 0,1 Teile eines handelsüblichen und für die Anwendung von Dispersionsfarbstoffen üblichen Dispergiermittels hinzu. Mit dieser Färbeflotte färbt man 5 Teile eines Polyester/Baumwolle-Mischgewebes (50:50) bei einer Temperatur von 130°C und einem pH-Wert von 6 während 90 Minuten. Danach wird das gefärbte Gewebe aus der Färbeflotte herausgenommen und nachbehandelt und fertiggestellt (bspw. wie im Anwendungsbeispiel 1 beschrieben). Man erhält ein gleichmäßig und klar orange gefärbtes Gewebe, bei dem beide Faseranteile durchgefärbt sind. Die Färbung besitzt die guten Echtheitseigenschaften der Baumwollfärbungen des Beispieles 2 und der Polyesterfärbungen des bekannten Dispersionsfarbstoffes.

Anwendungsbeispiel 4

Man bereitet ein Färbebad aus 59 Teilen Wasser, 1 Teil der erfindungsgemäßen Disazoverbindung des Beispieles 4, 50 Teilen wasserfreiem Natriumsulfat und 5 Teilen Phosphorsäure und stellt das Bad mit Natriumcarbonat auf einen pH-Wert von 4,5 ein. Sodann gibt man 50 Teile eines Baumwollgewebes hinein und führt die Färbung in geschlossener Apparatur unter ständiger Bewegung bei einer Färbetemperatur von 140°C während 30 Minuten durch. Anschließend nimmt man das gefärbte Gewebe heraus und stellt es durch Spülen mit heißem und kaltem Wasser, durch kochende Behandlung während 15 Minuten in einem wäßrigen, eine geringe Menge an einem nichtionogenen Waschmittel enthaltenden Bad, durch erneutes Spülen mit Wasser und Trocknen fertig.

Man erhält ein intensiv orangerot gefärbtes Baumwollgewebe mit sehr guten Echtheitseigenschaften.

Anwendungsbeispiel 5

Man stellt eine Färbeflotte aus 950 Teilen Wasser, 2 Teilen einer erfindungsgemäßen Kupferkomplex-Disazoverbindung des Beispieles 6 und 50 Teilen Natriumchlorid her. In diese Färbeflotte mit einem pH-Wert von etwa 6 gibt man 50 Teile eines Baumwollgewebes und färbt es durch Behandlung bei einer Färbetemperatur von 120°C während 2 Stunden. Es wird in üblicher Weise, beispielsweise analog den Angaben des Anwendungsbeispieles 1, fertiggestellt. Die Färbung zeigt einen kräftigen rotstichig blauen Farbton mit sehr guten Licht- und Naßlichtechtheiten.

**Patentansprüche**

1. Eine Disazoverbindung, die der allgemeinen Formel (1)

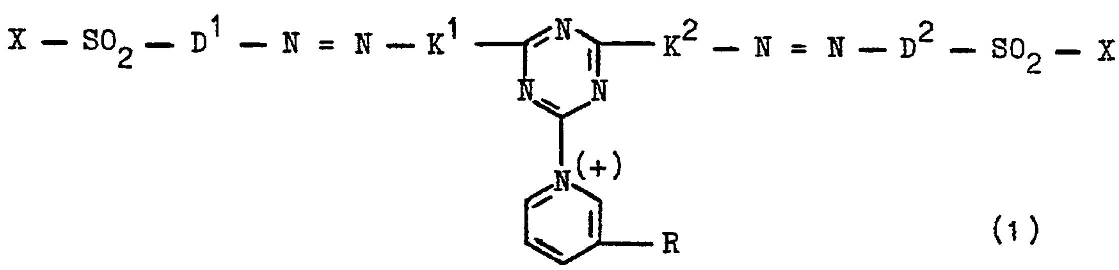

(1)

entspricht, in welcher bedeuten:

$D^1$ ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 2 Sulfogruppen, 1 Carboxygruppe, 1 Chloratom und 1 Bromatom ausgewählt sind, wobei einer dieser Substituenten in ortho-Stellung zur Azogruppe an den Benzolkern gebunden ist, oder

$D^1$ ist ein Naphthalinring, der durch eine Sulfogruppe in ortho-Stellung zur Azogruppe substituiert sein kann, oder

$D^1$ ist ein Rest der allgemeinen Formel (2a), (2b) oder (2c)

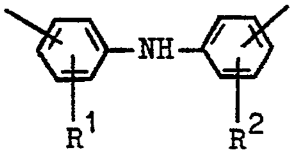

(2a)

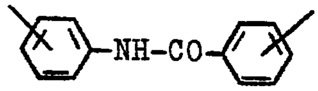

(2b)

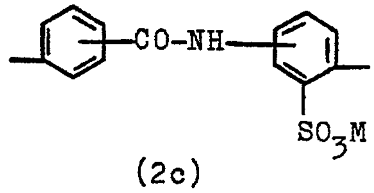

(2c)

in welchen
$R^1$ ein Wasserstoffatom, eine Nitro-, Sulfo-, Methyl-, Ethyl-, Methoxy- oder Ethoxygruppe bedeutet und $R^2$ eine der Bedeutungen von $R^1$ hat und zu $R^1$ gleich oder von $R^1$ verschieden ist,
$D^2$ ist ein Benzolring, der durch 1 oder 2 Substituenten substituiert sein kann, die aus der Menge von 2 Methylgruppen, 2 Ethylgruppen, 2 Methoxygruppen, 2 Ethoxygruppen, 2 Sulfogruppen, 1 Carboxygruppe, 1 Chloratom und 1 Bromatom ausgewählt sind, wobei einer dieser Substituenten in ortho-Stellung zur Azogruppe an den Benzolkern gebunden ist, oder
$D^2$ ist ein Naphthalinring, der durch eine Sulfogruppe in ortho-Stellung zur Azogruppe substituiert sein kann, oder
$D^2$ ist ein Rest der allgemeinen Formel (2d), (2e) oder (2f)

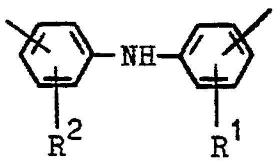

(2d)

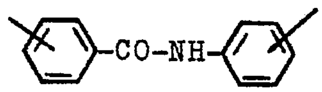

(2e)

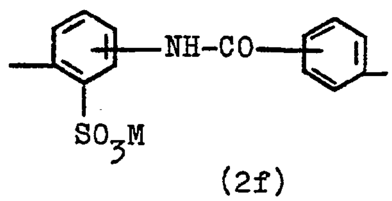

(2f)

in welchen
$R^1$ ein Wasserstoffatom, eine Nitro-, Sulfo-, Methyl-, Ethyl-, Methoxy- oder Ethoxygruppe bedeutet und $R^2$ eine der Bedeutungen von $R^1$ hat und zu $R^1$ gleich oder von $R^1$ verschieden ist,
wobei $D^1$ und $D^2$ zueinander gleiche oder voneinander verschiedene Bedeutungen besitzen können;
$K^1$ ist ein Rest der allgemeinen Formel (3a), (3b) oder (3c)

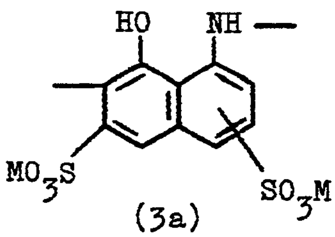

(3a)

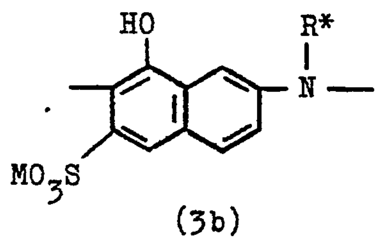

(3b)

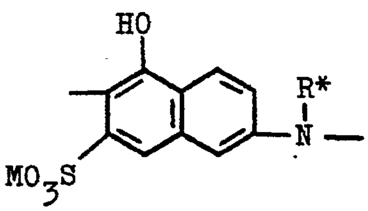

(3c)

in welchen
M ein Wasserstoffatom oder ein Alkalimetall ist,
R* eine Ethylgruppe oder bevorzugt ein Wasserstoffatom oder eine Methylgruppe ist und
die eine Gruppe $-SO_3M$ in Formel (3a) in meta- oder para-Stellung zur Gruppe NH steht;
$K^2$ ist ein Rest der allgemeinen Formel (4a), (4b) oder (4c)

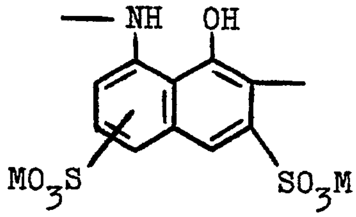

(4a)

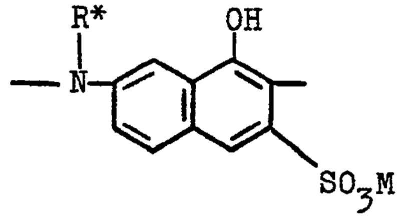

(4b)

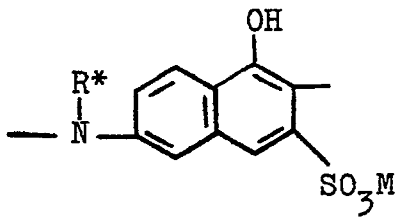

(4c)

in welchen

M und R* die obengenannten Bedeutungen haben und die eine Gruppe $-SO_3M$ in Formel (4a) in meta- oder para-Stellung zur Gruppe NH steht,

wobei K¹ und K² eine zueinander gleich oder voneinander verschieden sein können;

X ist die Vinylgruppe, eine β-Sulfatoethyl- oder die β-Chlorethyl-Gruppe, wobei beide X zueinander gleich oder voneinander verschieden sein können;

R ist die Carboxygruppe oder die Carbonamidgruppe;

eine der Sulfo- und Carboxygruppen in den Resten R, D¹, D², K¹ und K² bildet ein zum Pyridiniumkation äquivalentes Anion;

oder eine 1:1-Kupferkomplex-Verbindung einer Verbindung der allgemeinen Formel (1), in welcher X, R, D¹ und D², die obengenannten Bedeutungen haben, wobei jedoch D¹ oder D² oder beide eiüen Formelrest D* darstellen, wobei beide D* zueinander gleich oder voneinander verschieden sein können und jedes D* einen Benzolring bedeutet, der in ortho-Stellung zur Azogruppe durch eine Oxigruppe substituiert ist, an der das Kupferatom komplex gebunden ist, und der neben der Gruppe $-SO_2-X$ noch zusätzlich durch eine Methyl-, Ethyl-, Methoxy-, Sulfo- oder Carboxygruppe oder ein Chlor- oder Bromatom substituiert sein kann, oder ein Naphthalinring ist, der in ortho-Stellung zur Azogruppe durch eine Oxigruppe substituiert ist, an der das Kupferatom komplex gebunden ist, und K¹ und K² die obengenannten Bedeutungen haben, wobei deren naphtholische Hydroxygruppe als Oxigruppe mit dem Kupferatom komplex gebunden ist.

2. Verbindung nach Anspruch 1 der allgemeinen Formel (1), in welcher X, R, K¹ und K² die in Anspruch 1 genannten Bedeutungen haben und D¹ und D² zueinander gleiche oder voneinander verschiedene Bedeutungen besitzen können und jedes einen Benzolring bedeutet, der durch 1 oder 2 Substituenten substituiert sein kann, die aus der Menge von 2 Methoxygruppen, 1 Methylgruppe, 1 Chloratom und 1 Bromatom ausgewählt sind, wobei einer dieser Substituenten in ortho-Stellung zur Azogruppe gebunden steht, oder einen Naphthalinring bedeutet, der durch eine Sulfogruppe in ortho-Stellung zur Azogruppe substituiert sein kann.

3. Verbindung nach Anspruch 1 der allgemeinen Formel (1A)

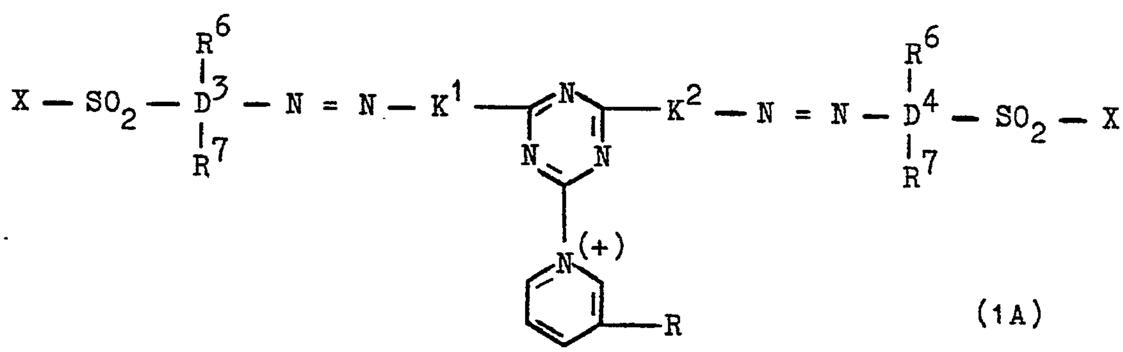

(1A)

in welcher

D³ und D⁴ zueinander gleiche oder voneinander verschiedene Bedeutungen besitzen und jedes einen Benzolring oder einen Naphthalinring bedeutet,

R⁶ in Falle, daß D³ bzw. D⁴ einen Benzolring bedeutet, ein Wasserstoffatom oder eine in ortho-Stellung

zur Azogruppe befindliche Methyl-, Ethyl-, Methoxy-, Ethoxy-, Sulfo- oder Carboxygruppe oder ein in ortho-Stellung zur Azogruppe befindliches Chlor- oder Bromatom ist, oder im Falle, daß $D^3$ bzw. $D^4$ einen Naphthalinring bedeutet, ein Wasserstoffatom oder eine in ortho-Stellung zur Azogruppe befindliche Sulfogruppe ist,
$R^7$ ein Wasserstoffatom oder eine Methyl-, Ethyl-, Methoxy-, Ethoxy-, Nitro- oder Sulfogruppe bedeutet und X, R, $K^1$ und $K^2$ die in Anspruch 1 genannten Bedeutungen haben.

4. Eine Verbindung nach Anspruch 1 entsprechend der allgemeinen Formel (1a) oder (1b)

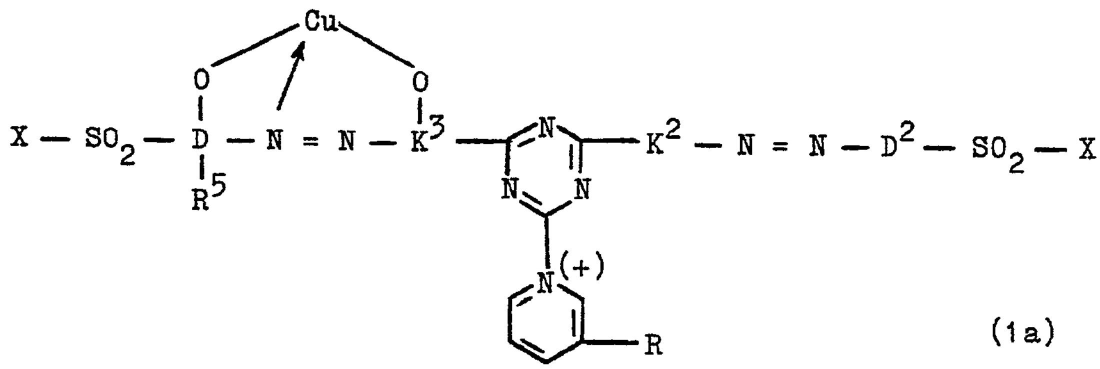

(1a)

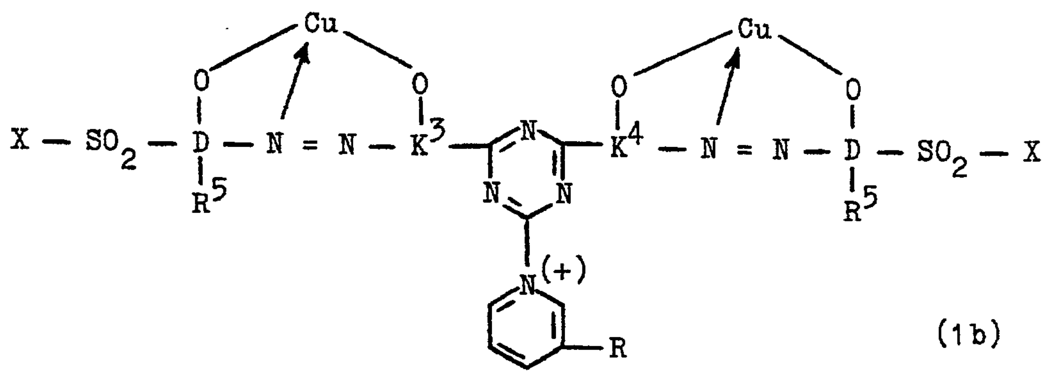

(1b)

in welchen X, $D^2$, $K^2$ und R die in Anspruch 1 genannten Bedeutungen haben und
D einen Benzolring oder einen Naphthalinring bedeutet, an welche die metallkomplexbildende Oxigruppe in ortho-Stellung zur Azogruppe gebunden steht,
$R^5$ ein Wasserstoffatom oder eine Methyl-, Ethyl-, Methoxy-, Ethoxy- oder Sulfogruppe oder ein Chloratom ist, falls D einen Benzolring bedeutet, oder
$R^5$ ein Wasserstoffatom ist, falls D einen Naphthalinring bedeutet,
wobei in Formel (1b) beide D bzw. beide $R^5$ eine zueinander gleiche oder eine voneinander verschiedene Bedeutung besitzen können,
$K^3$ ein Rest der allgemeinen Formel (5a), (5b) oder (5c)

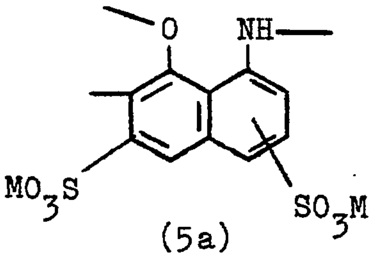

(5a)

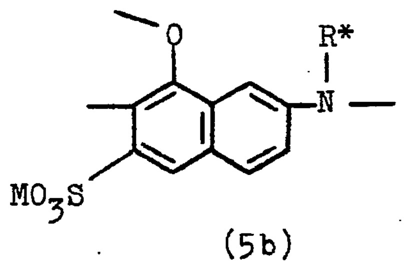

(5b)

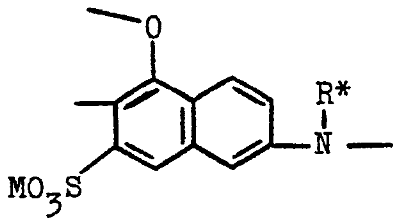

(5c)

ist, in welchen M und R* die in Anspruch 1 genannten Bedeutungen haben und
$K^4$ ein Rest der allgemeinen Formel (6a), (6b) oder (6c)

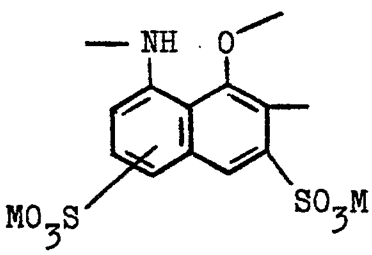

(6a)

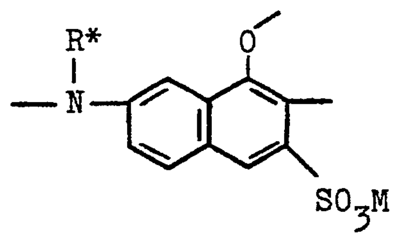

(6b)

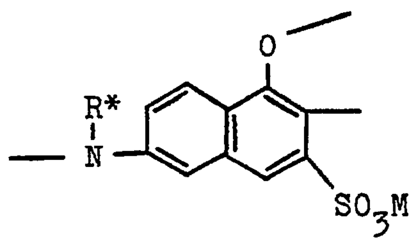

(6c)

ist, in welchen M und R* die in Anspruch 1 genannten Bedeutungen haben,
wobei $K^3$ und $K^4$ zueinander gleiche oder voneinander verschiedene Bedeutungen besitzen können.

5. Verbindung nach mindestens einem der Ansprüche 1 bis 4, dadurch gekennzeichnet, daß X eine β-Sulfatoethyl-Gruppe ist.

6. Verfahren zur Herstellung eine Verbindung von Anspruch 1, dadurch gekennzeichnet, daß man eine Verbindung der allgemeinen Formel (7)

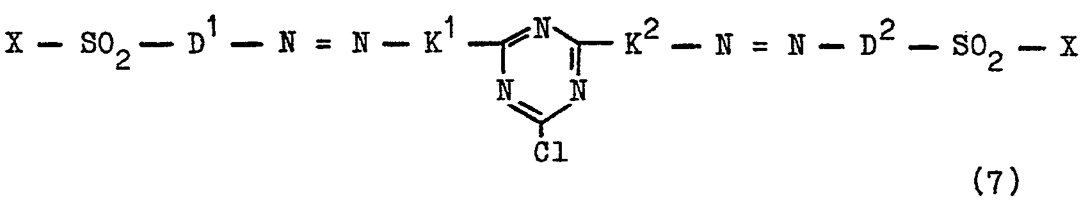

(7)

in welcher $D^1$, $D^2$, $K^1$, $K^2$ und X die in Anspruch 1 für Formel (1) angegebenen Bedeutungen haben oder, falls die Ausgangsverbindung der allgemeinen Formel (7) eine 1:1-Kupferkomplex-Verbindung ist, $D^1$ oder $D^2$ oder beide die für D* in Anspruch 1 angegebenen Bedeutungen haben und in $K^1$ und $K^2$ die jeweili-

ge naphtholische Hydroxygruppe als Oxigruppe mit dem Kupferatom komplex gebunden ist, mit Nicotinsäure oder Nicotinsäureamid umsetzt.

7. Verfahren zur Herstellung einer 1:1-Kupferkomplex-Disazoverbindung von Anspruch 1, dadurch gekennzeichnet, daß man eine Disazoverbindung, die der allgemeinen Formel (1) von Anspruch 1 entspricht und in welcher $D^1$ oder $D^2$ oder beide für den Formelrest D* stehen, wobei D* einen Benzolring bedeutet, der in ortho-Stellung zur Azogruppe eine Hydroxygruppe enthält und neben der Gruppe $-SO_2-X$ noch zusätzlich durch eine Methyl-, Ethyl-, Methoxy-, Ethoxy-, Sulfo- oder Carboxygruppe oder ein Chlor- oder Bromatom substituiert sein kann, oder ein Naphthalinring ist, der in ortho-Stellung zur Azogruppe eine Hydroxygruppe enthält, mit einem kupferabgebenden Mittel umsetzt, oder daß man eine Disazoverbindung der allgemeinen Formel (1), in welcher $D^1$ und $D^2$ oder beide für den obengenannten Rest D* stehen, wobei jedoch D* anstelle der ortho-ständigen Hydroxygruppe eine Methoxy- oder Ethoxygruppe enthält, mit einem kupferabgebenden Mittel unter entalkylierenden Kupferungsbedingungen in die KupferkomplexAzoverbindung überführt, oder daß man eine Disazoverbindung der allgemeinen Formel (1), in welcher $D^1$ oder $D^2$ oder beide für den obengenannten Rest D* stehen, wobei jedoch D* anstelle der ortho-ständigen Hydroxygruppe ein Wasserstoffatom enthält, durch Umsetzung mit einem kupferabgebenden Mittel und mit Hilfe eines Oxidationsmittels in die Kupferkomplex-Azoverbindung überführt.

8. Verwendung einer in Anspruch 1 genannten und definierten Verbindung der allgemeinen Formel (1) als Farbstoff.

9. Verwendung nach Anspruch 8 zum Färben von hydroxy- und/oder carbonamidgruppenhaltigem Material, vorzugsweise Fasermaterial.

10. Verwendung nach Anspruch 8, dadurch gekennzeichnet, daß das Fasermaterial ein Cellulosefaser-Polyesterfaser-Gemisch oder ein Cellulosefaser-Celluloseacetatfaser-Gemisch ist.

11. Verfahren zum Färben (einschließlich Bedrucken) von hydroxy- und/oder carbonamidgruppenhaltigem Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoff eine Verbindung von Anspruch 1 einsetzt.

12. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8 und bei einer Temperatur zwischen 100 und 150°C auf das Material einwirken läßt und auf dem Material fixiert.

13. Verfahren nach Anspruch 12, dadurch gekennzeichnet, daß man bei einem pH-Wert zwischen 5 und 7 färbt.

14. Verfahren nach Anspruch 12 oder 13, dadurch gekennzeichnet, daß man als Fasermaterial ein Cellulosefaser-Polyesterfaser-Gemisch oder ein Cellulosefaser-Cellulosetriacetatfaser-Gemisch einsetzt.

15. Verfahren nach Anspruch 14, dadurch gekennzeichnet, daß man zusätzlich einen Dispersionsfarbstoff einsetzt.

## Claims

1. A disazo compound conforming to the formula (1)

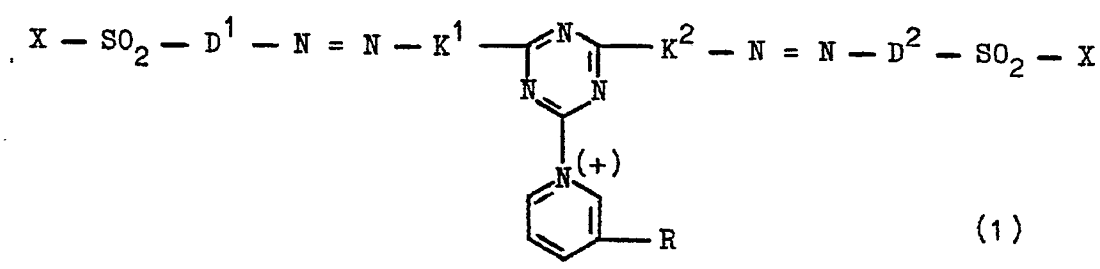

(1)

in which

$D^1$ is a benzene ring which can be substituted by 1 or 2 substituents which are selected from the set consisting of 2 methyl groups, 2 ethyl groups, 2 methoxy groups, 2 ethoxy groups, 2 sulfo groups, 1 carboxyl group, 1 chlorine atom and 1 bromine atom, one of these substituents being bonded to the benzene nucleus in the ortho-position relative to the azo group, or

$D^1$ is a naphthalene ring which can be substituted by a sulfo group in the ortho-position relative to the azo group, or

$D^1$ is a radical of the formula (2a), (2b) or (2c)

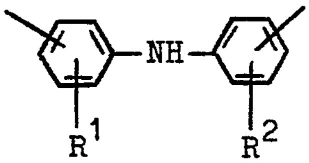
(2a)

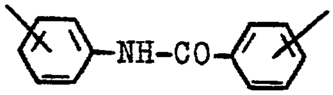
(2b)

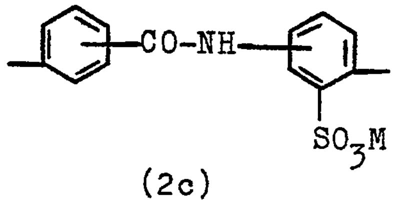
(2c)

in which

$R^1$ denotes a hydrogen atom or a nitro, sulfo, methyl, ethyl, methoxy or ethoxy group, and

$R^2$ has one of the meanings of $R^1$ and is identical to $R^1$ or different from $R^1$;

$D^2$ is a benzene ring which can be substituted by 1 or 2 substituents which are selected from the set consisting of 2 methyl groups, 2 ethyl groups, 2 methoxy groups, 2 ethoxy groups, 2 sulfo groups, 1 carboxyl group, 1 chlorine atom and 1 bromine atom, one of these substituents being bonded to the benzene nucleus in the ortho-position relative to the azo group, or

$D^2$ is a naphthalene ring which can be substituted by a sulfo group in the ortho-position relative to the azo group, or

$D^2$ is a radical of the formula (2d), (2e) or (2f)

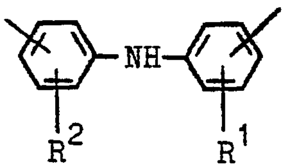
(2d)

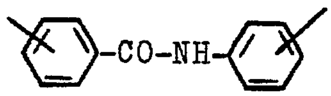
(2e)

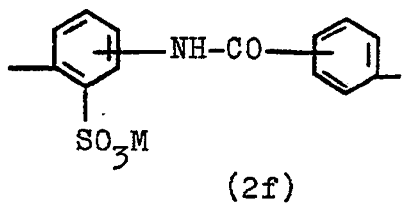
(2f)

in which

$R^1$ denotes a hydrogen atom or a nitro, sulfo, methyl, ethyl, methoxy or ethoxy group, and

$R^2$ has one of the meanings of $R^1$ and is identical to $R^1$ or different from $R^1$,

it being possible for $D^1$ and $D^2$ to have meanings identical to or different from each other;

$K^1$ is a radical of the formula (3a) (3b) or (3c)

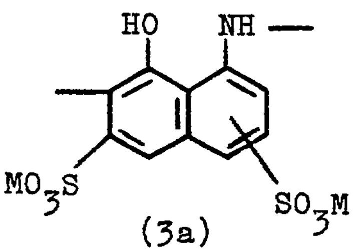
(3a)

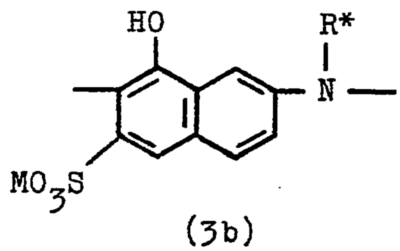
(3b)

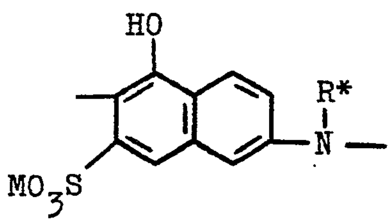
(3c)

in which

M is a hydrogen atom or an alkali metal,

R* is an ethyl group or preferably a hydrogen atom or a methyl group and the one $-SO_3M$ group in the formula (3a) is in the meta- or para-position relative to the NH group;

$K^2$ is a radical of the formula (4a), (4b) or (4c)

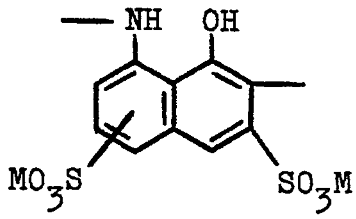

(4a)

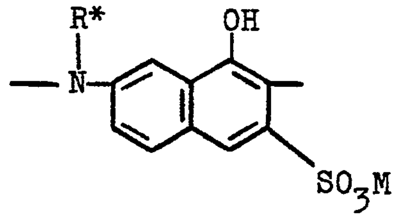

(4b)

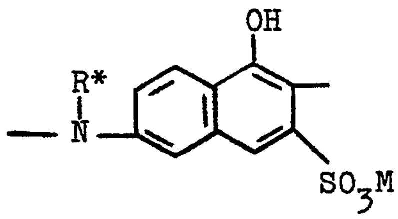

(4c)

in which

M and R* have the abovementioned meanings and the one $-SO_3M$ group in the formula (4a) is in the meta- or paraposition relative to the NH group,

it being possible for $K^1$ and $K^2$ to be identical to each other or different from each other;

X is the vinyl group, a β-sulfatoethyl group or the β-chloroethyl group, it being possible for the two X's to be identical to each other or different from each other;

R is the carboxyl group or the carboxamido group;

one of the sulfo and carboxyl groups in the radicals R, $D^1$, $D^2$, $K^1$ and $K^2$ forms an anion equivalent to the pyridinium cation;

or a 1:1 copper complex compound of a compound of the formula (1) in which X, R, $D^1$ and $D^2$ have the abovementioned meanings, where, however, $D^1$ or $D^2$ or both represent

a formula radical D*, it being possible for the two D*'s to be identical to or different from each other, and each D* denotes a benzene ring which is substituted in the ortho-position relative to the azo group by an oxy group to which the copper atom is complex-bonded, it being possible for this benzene ring to be substituted not only by the $-SO_2-X$ group but additionally by a methyl, ethyl, methoxy, sulfo or carboxyl group or a chlorine or bromine atom, or is a naphthalene ring which is substituted in the ortho-position relative to the azo group by an oxy group to which the copper atom is complex-bonded, and $K^1$ and $K^2$ have the abovementioned meanings, their naphtholic hydroxyl group being complex-bonded as an oxy group to the copper atom.

2. A compound as claimed in claim 1 of the formula (1) in which X, R, $K^1$ and $K^2$ have the meanings mentioned in claim 1 and $D^1$ and $D^2$ can have meanings identical to each other or different from each other and each denotes a benzene ring which can be substituted by 1 or 2 substituents which are selected from the set consisting of 2 methoxy groups, 1 methyl group, 1 chlorine atom and 1 bromine atom, one of these substituents being bonded in the ortho-position relative to the azo group, or denotes a naphthalene ring which can be substituted by a sulfo group in the ortho-position relative to the azo group.

3. A compound as claimed in claim 1 of the formula (1A)

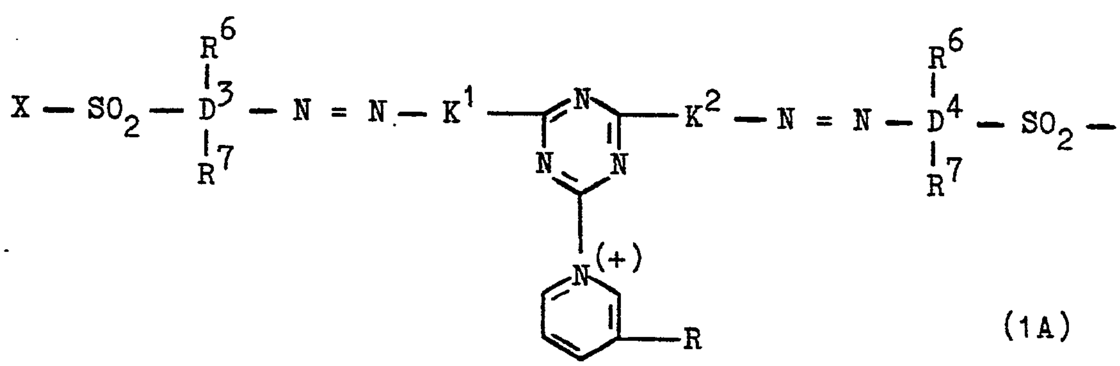

(1A)

in which

$D^3$ and $D^4$ have meanings identical to each other or different from each other and each denotes a benzene ring or a naphthalene ring,

$R^6$ is, in the case where $D^3$ or $D^4$ denotes a benzene ring, a hydrogen atom or a methyl, ethyl, methoxy, ethoxy, sulfo or carboxyl group in the ortho-position relative to the azo group, or a chlorine or bromine

atom in the ortho-position relative to the azo group, or, in the case where $D^3$ or $D^4$ denotes a naphthalene ring, a hydrogen atom or a sulfo group in the ortho-position relative to the azo group,

$R^7$ denotes a hydrogen atom or a methyl, ethyl, methoxy, ethoxy, nitro or sulfo group, and X, R, $K^1$ and $K^2$ have the meanings mentioned in claim 1.

4. A compound as claimed in claim 1 conforming to the formula (1a) or (1b)

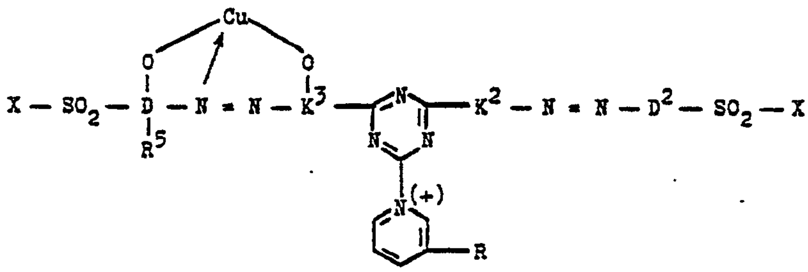

(1a)

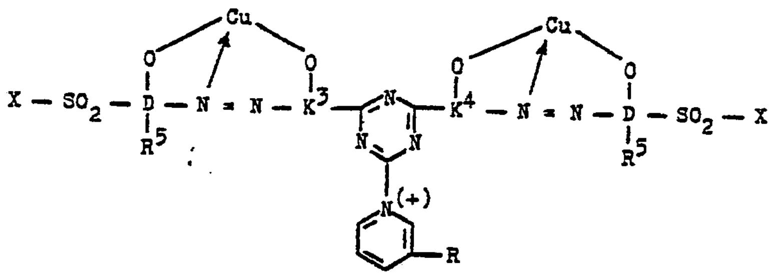

(1b)

in which X, $D^2$, $K^2$ and R have the meanings mentioned in claim 1 and

D denotes a benzene or naphthalene ring to which the metal-complexing oxy group is bonded in the orthoposition relative to the azo group,

$R^5$ is a hydrogen atom or a methyl, ethyl, methoxy, ethoxy or sulfo group or a chlorine atom if D denotes a benzene ring, or $R^5$ is a hydrogen atom if D denotes a naphthalene ring, it being possible in the formula (1b) for the two D's and the two $R^5$'s respectively to have a meaning identical to or different from each other,

$K^3$ is a radical of the formula (5a), (5b) or (5c)

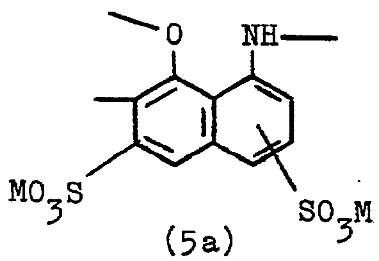

(5a)

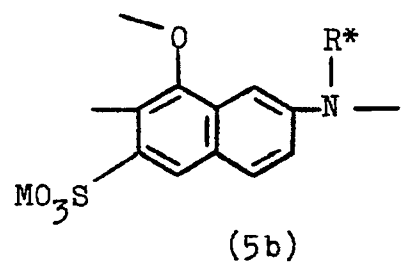

(5b)

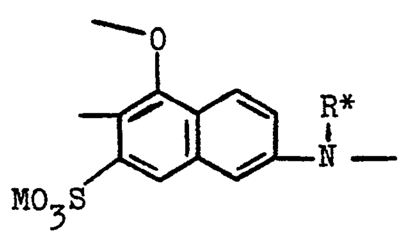

(5c)

in which

M and R* have the meanings mentioned in claim 1 and

$K^4$ is a radical of the formula (6a), (6b) or (6c),

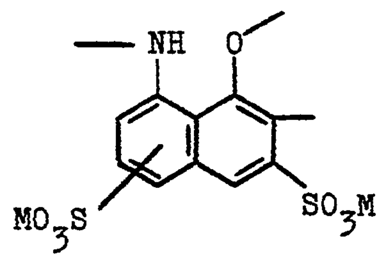

(6a)

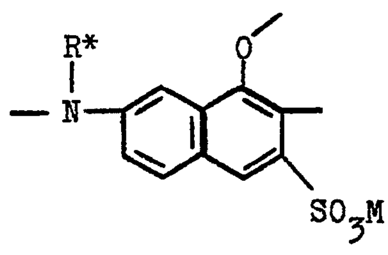

(6b)

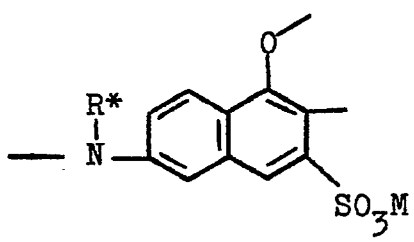

(6c)

in which

M and R* have the meanings mentioned in claim 1, it being possible for $K^3$ and $K^4$ to have meanings identical to each other or different from each other.

5. The compound as claimed in at least one of claims 1 to 4, wherein X is a β-sulfatoethyl group.

6. A process for preparing a compound of claim 1, which comprises reacting a compound of the formula (7)

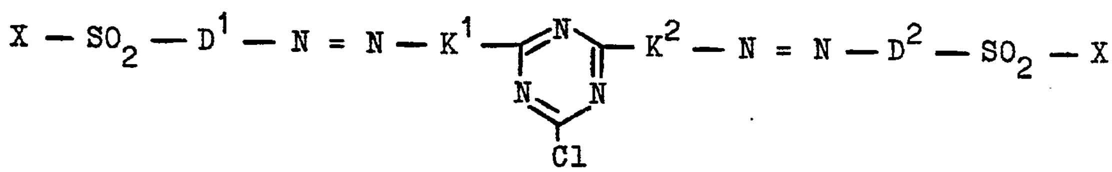

(7)

in which $D^1$, $D^2$, $K^1$, $K^2$ and X have the meanings mentioned in claim 1 for the formula (1) or, if the starting compound of the formula (7) is a 1:1 copper complex compound, $D^1$ or $D^2$ or both have the meanings indicated in claim 1 for D* and in $K^1$ and $K^2$ the respective naphtholic hydroxyl group is complex-bonded as an oxy group to the copper atom, with nicotinic acid or nicotinamide.

7. A process for preparing a 1:1 copper complex disazo compound of claim 1, which comprises reacting a disazo compound which conforms to the formula (1) of claim 1 and in which $D^1$ or $D^2$ or both stand for the formula radical D*, where D* denotes a benzene ring which contains in the ortho-position relative to the azo group a hydroxyl group and in addition to the $-SO_2-X$ group can additionally be substituted by a methyl, ethyl, methoxy, ethoxy, sulfo or carboxyl group or a chlorine or bromine atom, or is a naphthalene ring which contains in the ortho-position relative to the azo group a hydroxyl group, with a copper-donating agent, or converting a disazo compound of the formula (1) in which $D^1$ and $D^2$ or both stand for the abovementioned radical D* except that D* contains, in place of the hydroxyl group in the ortho-position, a methoxy or ethoxy group, with a copper-donating agent under dealkylating coppering conditions into the copper complex azo compound, or converting a disazo compound of the formula (1) in which $D^1$ or $D^2$ or both stand for the abovementioned radical D*, except that D* contains, in place of the hydroxyl group in the ortho-position, a hydrogen atom, by reaction with a copper-donating agent and by means of an oxidizing agent into the copper complex azo compound.

8. Use of the compound of the formula (1) mentioned and defined in claim 1, as a dye.

9. Use as claimed in claim 8 for dyeing hydroxyl- and/or carboxamido-containing material, preferably fiber material.

10. Use as claimed in claim 8, wherein the fiber material is a cellulose fiber/polyester fiber blend or a cellulose fiber/cellulose acetate fiber blend.

11. A process for dyeing (including printing) hydroxyl- and/or carboxamido-containing material, preferably fiber material, by applying a dye to the material from an aqueous solution and fixing it by means of heat and/or with the aid of an alkaline agent, which comprises using as the dye a compound of claim 1.

12. A process for dyeing hydroxyl-containing fiber material, preferably cellulose fiber material, which comprises applying a compound of claim 1 to the material in an aqueous solution and fixing it on the material by allowing it to act on the material from the aqueous solution at a pH value of between 4 and 8 and at a temperature between 100 and 150°C.

13. The process as claimed in claim 12, wherein the dyeing is carried out at a pH between 5 and 7.

14. The process as claimed in claim 12 or 13, wherein the fiber material used is a cellulose fiber/polyester fiber blend or a cellulose fiber/cellulose triacetate fiber blend.

15. The process as claimed in claim 14, wherein a disperse dye is also present.

**Revendications**

1. Composé disazoïques répondant à la formule générale (1):

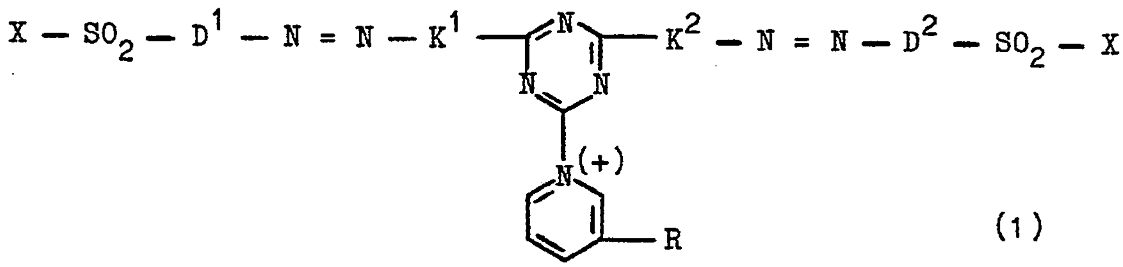

(1)

dans laquelle:

$D^1$ représente un noyau benzénique, qui peut être substitué par un ou deux substituants, choisis parmi deux groupes méthyles, deux groupes éthyles, deux groupes méthoxy, deux groupes éthoxy, deux groupes sulfo, un groupe carboxy, un atome de chlore et un atome de brome, l'un de ces substituants étant fixé en position ortho par rapport au groupe azoïque sur le noyau benzénique ou bien

$D^1$ représente un noyau naphtalénique, qui peut être substitué par un groupe sulfo en position ortho par rapport au groupe azoïque, ou bien

$D^1$ représente un reste répondant aux formules générales (2a), (2b), (2c):

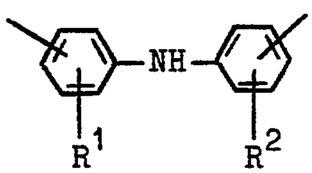

(2a)

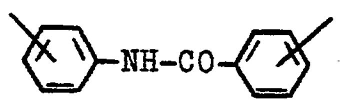

(2b)

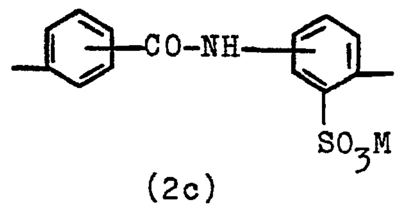

(2c)

dans lesquelles:

$R^1$ représente un atome d'hydrogène, un groupe nitro, sulfo, méthyle, éthyle, méthoxy ou éthoxy, et $R^2$ a l'un des sens de $R^1$ et peut être identique à $R^1$ ou en différer,

$R^2$ représente un noyau benzénique, qui peut être substitué par un ou deux substitants choisis parmi deux groupes méthyles, deux groupes éthyles, deux groupes méthoxy, deux groupes éthoxy, deux groupes sulfo, un groupe carboxy, un atome de chlore et un atome de brome, l'un de ces substituants étant fixé en position ortho par rapport au groupe azoïque sur le noyau benzénique, ou

$D^2$ représente un noyau naphtalénique, qui peut être substitué par un groupe sulfo en position ortho par rapport au groupe azoïque, ou bien

$D^2$ représente un reste répondant aux formules générales (2d), (2e) ou (2f):

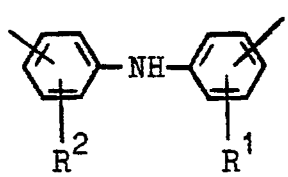

(2d)

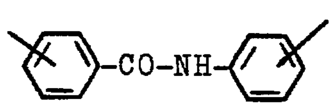

(2e)

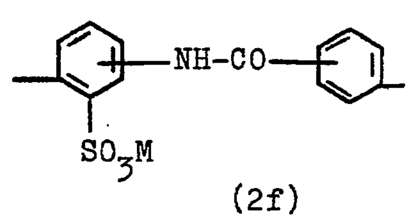

(2f)

dans lesquelles:

$R^1$ représente un atome d'hydrogène, un groupe nitro, sulfo, méthyle, éthyle, méthoxy ou éthoxy, et $R^2$ a l'un des sens de $R^1$ et peut être identique à $R^1$ ou en différer,

les symboles $D^1$ et $D^2$ pouvant avoir le même sens ou avoir un sens différent pour l'un et pour l'autre;
$K^1$ représente un reste répondant aux formules générales (3a), (3b) ou (3c):

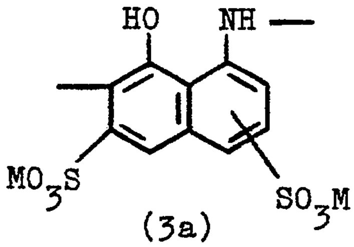

(3a)

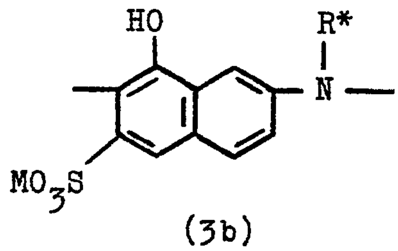

(3b)

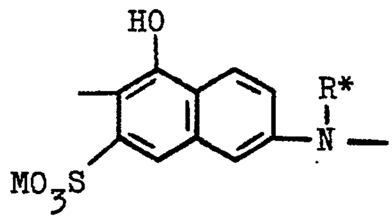

(3c)

dans lesquelles:

M représente un atome d'hydrogène ou un métal alcalin,

$R^*$ représente un groupe éthyle ou, de préférence, un atome d'hydrogène ou une groupe méthyle, et le groupe $-SO_3M$ est dans la formule (3a) en position méta ou para par rapport au groupe NH;

$K^2$ représente un reste répondant aux formules générales (4a), (4b) ou (4c):

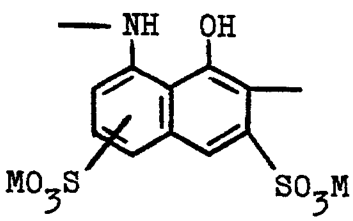

(4a)

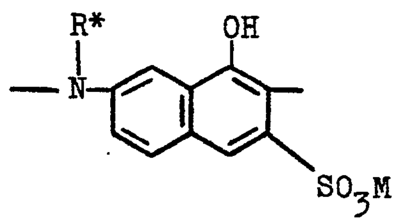

(4b)

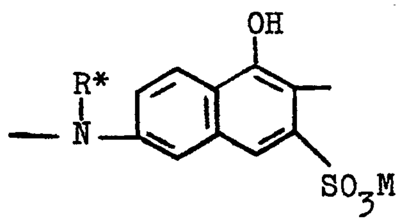

(4c)

dans lesquelles:

M et $R^3$ ont les sens précités, et un groupe $-SO_3M$ est dans la formule (4a) en position méta ou para par rapport au groupe NH, les symboles $K^1$ et $K^2$ pouvant être identiques ou différer l'un de l'autre;

X représente le groupe vinyle, un groupe sulfato-2 éthyle ou le groupe chloro-2 éthyle, les deux X pouvant être identiques ou différents;

R représente le groupe carboxy ou le groupe carboxymide;

l'un des groupes sulfo et carboxy des restes R, $D^1$, $D^2$, $K^1$ et $K^2$ formant un anion équivalent au cation pyridinium;

ou il s'agit d'un composé complexe de cuivre à 1:1 d'un composé de formule générale (1), dans laquelle X, R, $D^1$ et $D^2$ ont les sens précités, $D^1$ ou $D^2$ ou $D^1$ et $D^2$ représentent un reste $D^*$, les deux $D^*$ pouvant être identiques ou différents, et chaque $D^*$ représente un noyau benzénique qui est substitué, en position ortho par rapport au groupe azoïque, par un groupe oxy, sur lequel est fixé de manière complexe l'anion de cuivre, et qui, en plus du groupe $-SO_2-X$, peut encore être substitué par un groupe méthyle, éthyle, méthoxy, sulfo ou carboxy ou par un atome de chlore ou de brome, ou bien $D^*$ représente un noyau naphtalénique qui est fixé en position ortho par rapport au groupe azoïque par un groupe oxy sur lequel l'atome de cuivre est fixé de manière complexe, et $K^1$ et $K^2$ ont les sens précités, leur groupe hydroxy de naphtol étant en liaison complexe, à titre de groupe oxy, avec l'atome de cuivre.

2. Composés selon la revendication 1, de formule générale (1), dans laquelle X, R, $K^1$ et $K^2$ ont les sens indiqués à la revendication 1, et $D^1$ et $D^2$ peuvent avoir des sens identiques ou différents et chacun représente un noyau benzénique, qui peut être substitué par un ou deux substituants choisis parmi deux groupes méthoxy, un groupe méthyle, un atome de chlore et un atome de brome, l'un de ces substituants étants fixé en position ortho par rapport au groupe azoïque, ou bien il s'agit d'un noyau naphtalénique, qui peut être substitué par un groupe sulfo en position ortho par rapport au groupe azoïque.

3. Composés selon la revendication 1, de formule générale (1A):

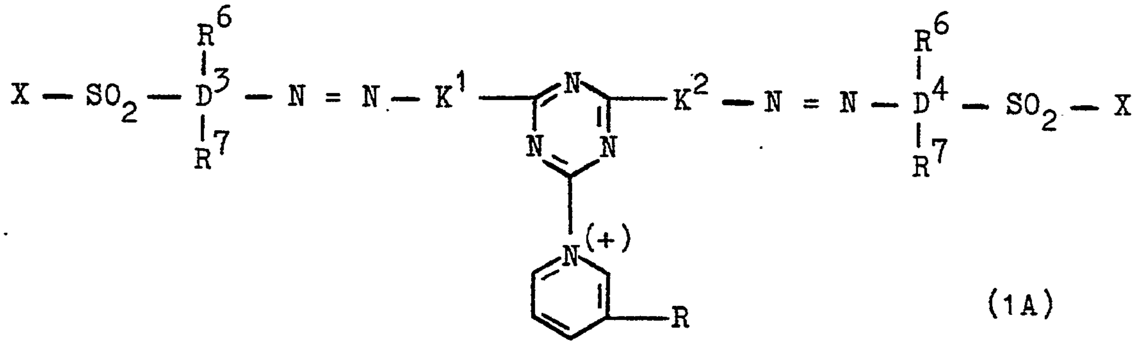

(1A)

dans laquelle:

$D^3$ et $D^4$ ont des sens identiques ou différents et chacun représente un noyau benzénique ou un noyau naphtalénique,

$R^6$ si ou $D^3$ ou $D^4$ représente un noyau benzénique, représente un atome d'hydrogène ou un groupe méthyle, éthyle, méthoxy, éthoxy, sulfo ou carboxa (en position ortho par rapport au groupe azoïque) ou bien, si $D^3$ ou $D^4$ représente un noyau naphtalénique, $R^6$ représente un atome d'hydrogène ou un groupe sulfo fixé en position ortho par rapport au groupe azoïque,

$R^7$ représente un atome d'hydrogène ou un groupe méthyle, éthyle, méthoxy, éthoxy, nitro ou sulfo,

et X, R, $K^1$ et $K^2$ ont les sens indiqués à la revendication 1.

4. Composés selon la revendication 1, répondant aux formules générales (1a) ou (1b):

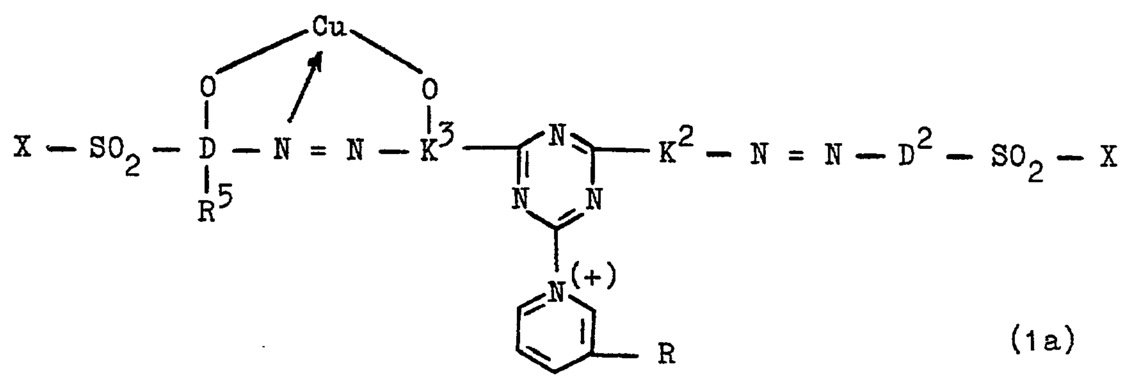

(1a)

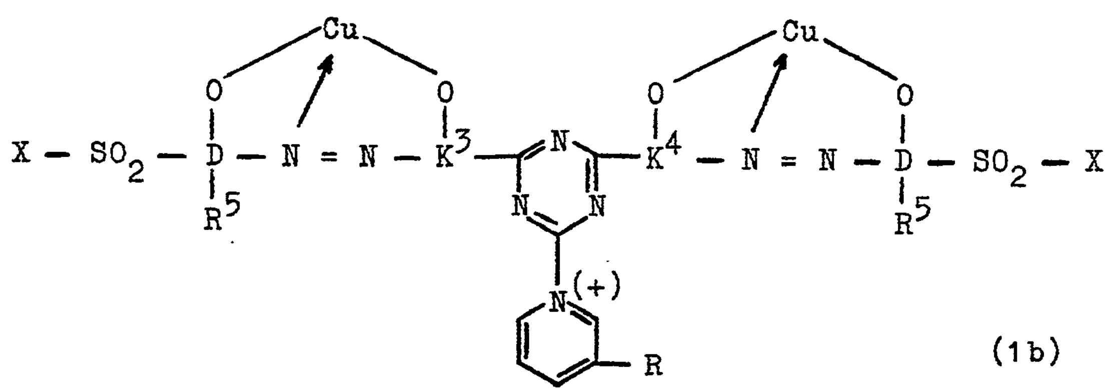

(1b)

dans lesquelles X, $D^2$, $K^2$ et R ont les sens indiqués à la revendication 1, et

D représente un noyau benzénique ou un noyau naphtalénique, sur lequel le groupe oxy, formateur d'un complexe avec un métal, est fixé en position ortho par rapport au groupe azoïque,

$R^5$ représente un atome d'hydrogène ou un groupe méthyle, éthyle, méthoxy, éthoxy ou sulfo ou un atome de chlore, si D représente un noyau benzénique, ou bien

$R^5$ représente un atome d'hydrogène si D représente un noyau naphtalénique,

et, dans la formule (1b), les deux symboles D ou les deux symboles $R^5$ peuvent posséder un sens identique ou différer l'un de l'autre,

$K^3$ représente un reste répondant aux formules générales (5a), (5b) ou (5c):

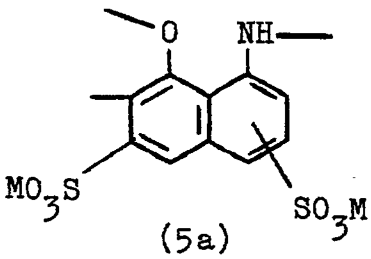
(5a)

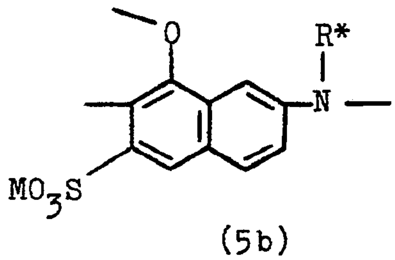
(5b)

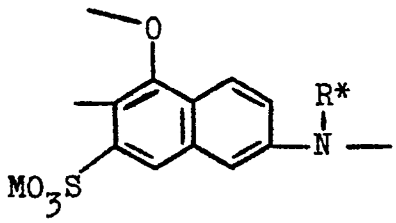
(5c)

dans lesquelles M et R* ont les sens indiqués à la revendication 1, et

$K^4$ représente un reste répondant aux formules générales (6a), (6b) ou (6c):

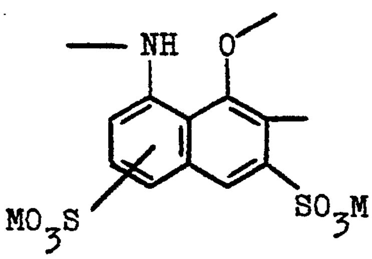
(6a)

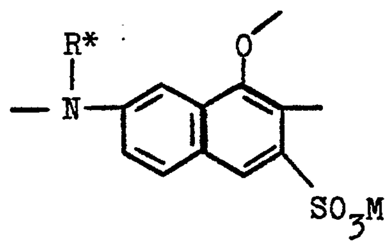
(6b)

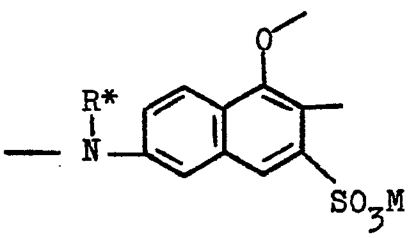
(6c)

dans lesquelles M et R* ont les sens indiqués à la revendication 1, les symboles $K^3$ et $K^4$ pouvant avoir le même sens ou avoir des sens différents l'un de l'autre.

5. Composés selon l'une au moins des revendications 1 à 4, caractérisés en ce que X représente un groupe sulfato-2 éthyle.

6. Procédé pour préparer un composé selon la revendication 1, caractérisé en ce qu'on fait réagir avec l'acide nicotinique ou avec le nicotinamide un composé de formule générale (7):

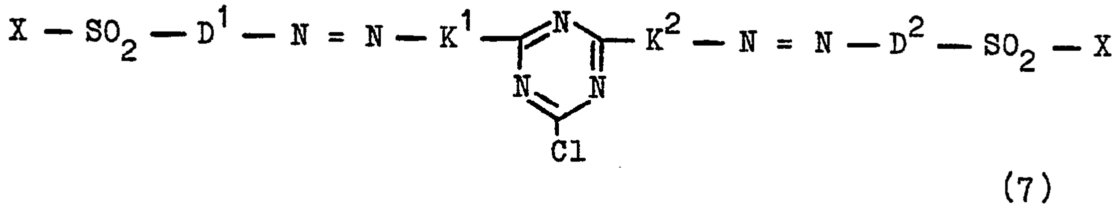

(7)

dans laquelle $D^1$, $D^2$, $K^1$, $K^2$ et X ont les sens indiqués dans la revendication 1 pour la formule (1) ou bien, si le composé de départ de formule générale (7) est un composé complexe à 1:1 de cuivre $D^1$ ou $D^2$ ou bien $D^1$ et $D^2$ a ou ont les sens indiqués pour D* à la revendication 1 et, dans $K^1$ et $K^2$, le groupe hydroxy de naphtol est lié de manière complexe, à titre de groupe oxy, avec l'atome de cuivre.

7. Procédé pour préparer un composé disazoïque complexe à 1:1 de cuivre selon la revendication 1, caractérisé en ce qu'on fait réagir avec un agent cédant du cuivre un composé disazoïque répondant à la formule générale (1) selon la revendication 1 et dans laquelle $D^1$ ou $D^2$ ou bien $D^1$ et $D^2$ représente (nt) le reste D*, le reste D* représentant un noyau benzénique qui contient un groupe hydroxy en position ortho par rapport au groupe azoïque qui, en plus du groupe $-SO_2-X$, peut également être substitué par un groupe méthyle, éthyle, méthoxy, éthoxy, sulfo ou carboxy ou par un atome de chlore ou de brome, ou bien $D^3$ représente un noyau naphtalénique, qui contient un groupe hydroxy fixé en position ortho par rapport au groupe azoïque, ou bien

on transforme un composé disazoïque de formule générale (1), dans laquelle $D^1$ ou $D^2$ ou bien $D^1$ et $D^2$ représentent le reste D* précité, mais D* contient, au lieur du groupe hydroxy en ortho, un groupe méthoxy ou éthoxy, avec un agent cédant du cuivre dans des conditions de cuivrage avec enlèvement d'un groupe alkyle, pour obtenir le composé azoïque de complexe de cuivre,

ou bien on transforme un composé disazoïque de formule générale (1), dans laquelle $D^1$ ou $D^2$ ou bien $D^1$ et $D^2$ représentente(nt) le reste D* précité, mais D* contient, au lieu du groupe hydroxy en ortho, un atome d'hydrogène, par réaction avec un agent cédant du cuivre et à l'aide d'un agent d'oxydation, en le composé azoïque de complexe cuivre.

8. Utilisation d'un composé de formule générale (1), sité et défini à la revendication 1, à titre de colorant.

9. Utilisant selon la revendication 8 pour teindre une matière contenant des groupes hydroxy et/ou carboxymide, avantageusement une matière fibreuse.

10. Utilisation selon la revendication 8, caractérisé en ce que la matière fibreuse est un mélange de fibres cellulosiques et de fibres de polyester ou est un mélange de fibres cellulosiques et de fibres d'acétate de cellulose.

11. Procédé pour teindre (ce qui comprend l'impression) une matière contenant des groupes hydroxy et/ou carboxamides, avantageusement une matière fibreuse, selon lequel on applique en solution aqueuse un colorant sur la matière et l'on fixe ce colorant à l'aide de la chaleur et/ou à l'aide d'un agent à action alcaline, procédé caractérisé en ce qu'on utilise comme colorant un composé selon la revendication 1.

12. Procédé pour teindre de la matière fibreuse contenant des groupes hydroxy, avantageusement de la matière en fibres cellulosiques, caractérisé en ce qu'on applique en solution aqueuse sur la matière un composé selon la revendication 1 et on laisse agir le composé à partir de la solution aqueuse à un pH compris entre 4 et 8 et à une température comprise entre 100 et 150°C sur la matière, et l'on fixe le composé sur la matière.

13. Procédé selon la revendication 12, caractérisé en ce qu'on teint à un pH compris entre 5 et 7.

14. Procédé selon la revendication 12 ou 13, caractérisé en ce qu'on utilise comme matière fibreuse un mélange de fibres de cellulose et de fibres de polyester ou un mélange de fibres de cellulose et de fibres de triacétate de cellulose.

15. Procédé selon la revendication 14, caractérisé en ce qu'on utilise en outre un colorant appliqué en dispersion.